# EUROPÄISCHE PATENTANMELDUNG

(11) **EP 4 635 726 A2**
(43) Veröffentlichungstag der Anmeldung: **22.10.2025**
(21) Anmeldenummer: 25201061.6
(22) Anmeldetag: 30.01.2017
(51) Int. Cl.: B29D 35/12

(54) **DIABETIKER-SICHERHEITSSCHUH**

(30) Priorität: 28.01.2016 EP 16153210
(62) Teilanmeldung aus: 17706145.4
(71) Anmelder: Elten GmbH, 47589 Uedem (DE)
(72) Erfinder: VAN ELTEN, HEINER, 47589 Uedem (DE)
(74) Vertreter: Rösler Rasch van der Heide & Partner

(57) **Zusammenfassung**

Die Erfindung betrifft einen Diabetiker-Sicherheitsschuh (10), umfassend einen Außenschuh (12) und einen in den Außenschuh (12) einsetzbaren und aus dem Außenschuh (12) wieder entnehmbaren Innenschuh (14), wobei
- der Außenschuh (12) eine Außenschuh-Sohle (24), die eine Außenschuh-Laufsohle (26) und eine Außenschuh-Brandsohle (30) umfasst, und weiterhin einen Außenschuh-Schaft (32) aufweist,
- der Außenschuh (12) eine Außenschuh-Zehenschutzkappe (66) aufweist, und wobei
- der Innenschuh (14) einen Innenschuh-Schaft (18) und eine Innenschuh-Brandsohle (20) aufweist,
- der Innenschuh-Schaft (18) eine stützende Vorderkappe (22) aufweist.

Die Außenschuh-Sohle (24) umfasst vorzugsweise eine Außenschuh-Zwischensohle (28). Weiterhin umfassen der Innenschuh (14) bzw. der Außenschuh (12) vorzugsweise jeweils eine Innenschuh-Zunge (34) bzw. eine Außenschuh-Zunge (36). Der Diabetiker in der Strich Sicherheitsschuh (10) Post optional zusätzlich eine in den Innenschuh (14) einführbare und wieder entnehmbare Fußbettung (16). Die Erfindung betrifft weiterhin ein Verfahren zur Anpassung eines Diabetiker-Sicherheitsschuhs (10) an die Fußform eines Trägers.

## Beschreibung

Die Erfindung betrifft, bezogen auf einen Diabetiker-Sicherheitsschuh umfassend einen Außenschuh und einen daraus entnehmbaren Innenschuh, weiterhin einen entsprechenden Außenschuh bzw. einen entsprechenden Innenschuh, ein Verfahren zur Anpassung des Außenschuhs an die Fußform eines Trägers.

Diabetes mellitus, nachfolgend kurz als Diabetes bezeichnet, führt zu Fußschädigungen, dem sogenannten diabetischen Fußsyndrom, welches sich in Durchblutungsstörungen und Nervenschädigungen äußert und umgangssprachlich auch als Diabetikerfuß oder diabetischer Fuß bezeichnet wird. Aufgrund der Nervenschädigungen ist das Schmerzempfinden beeinträchtigt, sodass Verletzungen unter Umständen nicht wahrgenommen werden, und aufgrund der Durchblutungsstörungen kommt es zu einer Anfälligkeit für Wunden und einer schlechten Wundheilung. Sicherheitsschuhe dienen dazu, die Füße von deren Trägern vor Unfällen zu schützen. Bei Sicherheitsschuhen handelt es sich in der Regel um sehr festes Schuhwerk. Bei gesunden Füßen stellt dies keinerlei Problem dar. Angesichts der zunehmenden Verbreitung von Diabetes in der Bevölkerung erhöht sich die Wahrscheinlichkeit, dass Arbeiter, die Sicherheitsschuhe benötigen, gleichzeitig auch Diabetiker sind und entsprechend für Verwundungen anfällige oder möglicherweise bereits geschädigte Füße aufweisen. Aus diesem Grund werden vermehrt Anstrengungen unternommen, Sicherheitsschuhe bereitzustellen, die speziell an die Erfordernisse von Diabetikern angepasst sind, und insbesondere der Verletzlichkeit von diabetischen Füßen Rechnung tragen. Beispielsweise beschreibt die Offenlegungsschrift EP 2684475 A1 eine Sohle für einen Diabetiker-Schutzschuh sowie einen entsprechenden Schutzschuh. Allerdings besteht nach wie vor Bedarf an verbesserten Lösungen für Diabetiker-Sicherheitsschuhe.

Ein besonderes Problem im Zusammenhang mit dem diabetischen Fußsyndrom besteht darin, dass Druckstellen, die durch einen Sicherheitsschuh auf den Fuß eines Trägers ausgeübt werden, von diesem aufgrund der herabgesetzten Nervenempfindung nicht oder nicht deutlich wahrgenommen werden, und somit Warnsignale entfallen, die von einem gesunden Träger wahrgenommen würden. Die Aufgabe der vorliegenden Erfindung besteht dementsprechend darin, einen Diabetiker-Sicherheitsschuh bereitzustellen, welcher der besonderen Verletzlichkeit von Füßen mit diabetischem Fußsyndrom Rechnung trägt, und beispielsweise die Gefahr von Verletzungen diabetischer Füße durch Sicherheitsschuhe herabsetzt oder im Fall bereits verletzter Füße ein besseres Management der Fußverletzung bzw. der Sicherheitsschuhe ermöglicht.

Die Aufgabe ist in einem ersten Aspekt gelöst durch einen Diabetiker-Sicherheitsschuh, umfassend einen Außenschuh und einen in den Außenschuh einsetzbaren und aus dem Außenschuh wieder entnehmbaren Innenschuh, wobei der Außenschuh eine Außenschuh-Sohle, die eine Außenschuh-Laufsohle und eine Außenschuh-Brandsohle umfasst, und weiterhin einen Außenschuh-Schaft umfasst, und weiterhin der Außenschuh eine Außenschuh-Zehenschutzkappe umfasst. Weiterhin umfasst der Innenschuh einen Innenschuh-Schaft und eine Innenschuh-Brandsohle, und der Innenschuh-Schaft umfasst eine stützende Vorderkappe. Gemäß seiner Bestimmung als Sicherheitsschuh stellt der Außenschuh-Schaft des Diabetiker-Sicherheitsschuhs eine im Wesentlichen oder vollständig durchbruchsfreie Oberfläche bereit, welche die darunterliegende Oberfläche eines vom Außenschuh aufzunehmenden Innenschuhs von der Außenwelt abschirmt und somit vor mechanischen und/oder chemischen Einwirkungen aus der Außenwelt schützt. Der Außenschuh des Diabetiker-Sicherheitsschuhs ist insbesondere nicht als Sandale ausgeführt, so dass der Außenschuh-Schaft nicht durch eine Vielzahl von Riemen und/oder miteinander verbundene Riemen gebildet wird. Gemäß seiner Bestimmung als Sicherheitsschuh weist der hierin beschriebene, für Diabetiker geeignete Sicherheitsschuh-Merkmale auf, die ihn zum Schutz einer Person, welche diesen Diabetiker-Sicherheitsschuh trägt, vor Verletzungen geeignet macht, die bei Unfällen auftreten können. Ein obligatorisches Merkmal stellt eine Außenschuh-Zehenschutzkappe dar. Unter einer Außenschuh-Zehenschutzkappe wird eine Schutzkappe im Zehenbereich des Außenschuhs verstanden, die den Zehenbereich von vorne, von den Seiten, also von der Seite des Innenrists und des Außenrists, und von oben abdeckt. Von oben betrachtet überdeckt die Außenschuh-Zehenschutzkappe bei Messung zwischen der zwischen dem Innenrist und dem Außenrist verlaufenden Mittellinie, die in einer durch einen Fuß verlaufenden Sagittalebene vom Fersenbereich zum Zehenbereich liegt, an der Stelle ihrer größten Ausdehnung den Zehenbereich, betrachtet vom Schuhspitzenende in Richtung des Mittelfußbereichs, um wenigstens 30 mm. Alternativ kann, sofern entsprechende gesetzliche Normen einschlägig sind, auf Normen wie die DIN EN ISO 20345 oder andere nationale oder regionale Normen bzw. darauf Bezug nehmende weitere Normen verwiesen werden. Je nach einschlägiger Norm kann vorgesehen sein, dass eine Außenschuh-Zehenschutzkappe ein ursprünglich separates Bauteil darstellt, welches so in den Außenschuh des Diabetiker-Sicherheitsschuhs eingearbeitet wird, dass es nicht ohne Beschädigung des Diabetiker-Sicherheitsschuhs aus diesem entnommen werden kann.

Der Innenschuh-Schaft und die Innenschuh-Brandsohle stellen ursprünglich voneinander getrennte Bauteile dar, die im Zuge der Herstellung des Innenschuhs miteinander verbunden werden, beispielsweise über eine Naht. Dadurch können für den Innenschuh-Schaft und die Innenschuh-Brandsohle unterschiedliche Materialien mit unterschiedlichen, auf die jeweiligen Erfordernisse optimierten Eigenschaften verwendet werden, beispielsweise ein härteres Material für die durch das Körpergewicht eines Schuhträgers belastete Innenschuh-Brandsohle und ein weicheres Material für das die außerhalb der Fußsohle liegenden, dünneren Hautbereiche des Fußes abdeckt.

Die Außenschuh-Laufsohle kann mit der Außenschuh-Brandsohle vernäht, verklebt und/oder damit verschmolzen sein. Bei herkömmlichen einteiligen Diabetiker-Sicherheitsschuhen nach dem Stand der Technik, die keinen Innenschuh, sondern lediglich ein Innenmaterial als integralen Bestandteil des Sicherheitsschuhs aufweisen, besteht ein großes Problem in der Faltenbildung des Innenmaterials eines solchen Sicherheitsschuhs. Die Faltenbildung kommt dadurch zustande, dass sich das Innenmaterial und/oder die Socken des Trägers beim Einführen des Fußes in den Sicherheitsschuh verlagern. Die Falten wiederum führen zu einer ungleichen Druckverteilung auf den Fuß des Trägers, und im schlimmsten Fall zu Druckstellen, welche die Blutversorgung lokal stören, Verletzungen verursachen und/oder auch Eintrittspforten für Keime schaffen können. Bei dem vorliegenden erfindungsgemäßen Schuh wird zunächst einmal ein weiches Material in Form des Innenschuhs bereitgestellt. Die stützende Vorderkappe versteift die Gesamtkonstruktion des Innenschuhs in dessen vorderen Bereich, etwa in einem Bereich der Zehen und/oder der Vorderfußballen, wobei die dadurch erreichte Versteifung auch in weiter in Richtung der Ferse gelegene Bereiche des Innenschuhs ausstrahlt. Dabei ist die stützende Vorderkappe selbst verformbar, vorzugsweise elastisch verformbar, jedoch weniger verformbar als das Material des Innenschuh-Schafts. Sie bewirkt, dass der von der Vorderkappe abgedeckte Teil des Innenschuh-Schafts stabilisiert wird und faltenfrei bleibt, wobei die dadurch bewirkte Stabilisierung des Innenschuh-Schafts sich auch auf weitere Teile des Innenschuh-Schafts auswirkt, die nicht direkt von der Vorderkappe abgedeckt sind. Dadurch wird vorteilhaft bewirkt, dass beim Einführen des Innenschuhs in den Außenschuh die Gefahr einer Faltenbildung des Innenschuhs verringert wird. Wird nun ein diabetischer Fuß eingeführt, so wird wiederum die Gefahr minimiert, dass dieser im Innenschuh mit Falten in Kontakt kommt oder selbst zur Bildung von Falten führt, die zu Druckstellen oder Scheuerstellen führen könnten. Im Vergleich dazu wäre ein Innenschuh-Schaft ohne die stützende Vorderkappe im vorderen Bereich verhältnismäßig leicht verformbar, und könnte beispielsweise beim Einführen des Innenschuhs in den Außenschuh Falten werfen, die sich gegebenenfalls unkontrolliert in Richtung des hinteren Bereichs fortsetzen und letztlich zu Druckstellen auf dem Fuß eines Trägers führen. Der diabetische Fuß kann mit oder ohne Socken eingeführt werden, wobei in ersterem Fall das verformbare Material des Innenschuh-Schafts die Gefahr verringert, dass eine Socke beim Einführen des Fußes in den Innenschuh-Schaft Falten verursacht. Gemäß einer Weiterbildung ist vorgesehen, dass die stützende Vorderkappe in eine sehr genau definierte Position innerhalb des Außenschuhs gebracht werden kann, beispielsweise durch Zusammenwirken mit der Schutzkappe des Außenschuhs. Dementsprechend wird ebenfalls die Gefahr verringert, dass der Innenschuh in ungewollter Form verzerrt innerhalb des Außenschuhs vorliegt, was wiederum die Gefahr einer Faltenbildung erhöhen würde. Ein Zusammenwirken mit der Schutzkappe ist beispielsweise vorteilhaft möglich zwischen der stützenden Vorderkappe, die sich in einer gekrümmten Oberfläche entlang des Innenschuh-Schafts erstreckt, und einer darauf abgestimmten gekrümmten Oberfläche der Außenschuh-Zehenschutzkappe im Bereich des Außenschuh-Schafts.

Die stützende Vorderkappe wird beispielsweise gebildet durch ein hitzeverformbares Material. Dabei kann es sich beispielsweise um ein Kunststoffmaterial handeln, das gegebenenfalls als Textilmaterial ausgeführt ist, oder um ein Kompositmaterial umfassend eine kunststoffhaltige Oberseite, oder eine kunststofffreie Oberseite in Kombination mit einer kunststoffhaltigen Unterseite, die in erhitztem Zustand auf das Material des Innenschuh-Schafts aufgeschmolzen werden kann, vorzugsweise auf die Außenseite des Innenschuh-Schafts. Sofern nicht eine bereits an die Form des Innenschuh-Schafts angepasste stützende Vorderkappe aufgeschmolzen wird, kann die Form der Vorderkappe dementsprechend während des Aufschmelzens angepasst werden. Alternativ können beispielsweise während dieses Vorgangs die Formen der stützenden Vorderkappe und des von dieser abgedeckten Teils des Innenschuh-Schafts jeweils so angepasst werden, dass die gewünschte Form entsteht, beispielsweise mittels eines eingeführten Leistens. Gemäß einer Weiterbildung umfasst das Kunststoffmaterial ein thermoplastisches Elastomer oder besteht daraus. Gemäß einer besonderen Weiterbildung wird die Form der stützenden Vorderkappe des Innenschuhs an die Form der Außenschuh-Schutzkappe angepasst, um einen möglichst passgenauen Sitz des Innenschuhs im Außenschuh zu ermöglichen und dadurch wiederum ein Verrutschen, das seinerseits zu einer Faltenbildung führen könnte, zu erschweren oder zu verhindern.

Während herkömmliche Schuhe nach dem Stand der Technik durch mühsames Ausleuchten mithilfe von Taschenlampen in den Dunkelbereichen des Schuhs oder unter Verwendung von Endoskopen darauf überprüft werden müssen, ob sich beschädigte Stellen oder verschmutzte Stellen im Schuh gebildet haben könnten, ermöglicht die Entnehmbarkeit des Innenschuhs ein ungleich einfacheres Kontrollieren des Innenschuhs außerhalb des Diabetiker-Sicherheitsschuhs. Da der Innenschuh derjenige Teil des Diabetiker-Sicherheitsschuhs ist, der mit dem Fuß eines Schuhträgers direkt in Kontakt kommt, können sich Verschmutzungen gravierend auf den Gesundheitszustand des Trägers auswirken. Aus diesem Grund stellt die deutlich erleichterte Kontrollierbarkeit einen wesentlichen Vorteil dar und gibt dem Verwender des Diabetiker-Sicherheitsschuhs ein einfaches, jedoch wirksames diagnostisches Hilfsmittel zur Beurteilung des Gesundheitszustands seiner vom diabetischen Fußsyndrom betroffenen Füße an die Hand.

Die Entnehmbarkeit des Innenschuhs stellt weiterhin vorteilhaft die Möglichkeit bereit, den Innenschuh erforderlichenfalls durch einen neuen Innenschuh auszutauschen. Beispielsweise treten Verschmutzungen, welche die Gesundheit eines Trägers mit diabetischen Füßen gefährden können, insbesondere natürlich im Innenbereich von Sicherheitsschuhen auf, der mit Flüssigkeitsabsonderungen, insbesondere Wundsekreten, in Kontakt kommt. Bei herkömmlichen Sicherheitsschuhen stellt der Innenbereich einen integralen Bestandteil des gesamten Sicherheitsschuhs dar, der nicht entnehmbar ist. Für den Fall, dass der Innenbereich eines derartigen Schuhs so verschmutzt ist, dass eine weitere Verwendung aus medizinischer Sicht nicht mehr ratsam ist, wird somit der gesamte Schuh unbrauchbar. Bei dem erfindungsgemäßen Diabetiker-Sicherheitsschuh beschränken sich die medizinisch relevanten Verschmutzungen, beispielsweise Wundsekrete, im Wesentlichen oder ausschließlich auf die Innenschuhe. Die Außenschuhe dagegen werden über einen vergleichsweise langen Zeitraum in einem gebrauchsfähigen Zustand beibehalten. Wird festgestellt, dass ein Innenschuh zur Vermeidung unnötiger medizinischer Risiken nicht mehr verwendet werden sollte, etwa aufgrund festgestellter Verschmutzungen, wie etwa abgesonderter Wundsekrete, so kann er problemlos gegen einen neuen Innenschuh ausgetauscht werden, sofern die Verschmutzungen nicht wieder entfernbar sind. Insbesondere die Möglichkeit, den Innenschuh auf das Vorhandensein von Wundsekreten oder Blutungen zu untersuchen, gibt dem Träger eines derartigen Diabetiker-Sicherheitsschuhs ein einfaches diagnostisches Hilfsmittel zur Beurteilung des Gesundheitszustands seiner diabetischen Füße an die Hand, ebenso wie ein Mittel zum Management seines Diabetiker-Sicherheitsschuhs etwa zur Beurteilung von dessen weiterer Gebrauchsfähigkeit.

Der Innenschuh-Schaft ist vorzugsweise so gestaltet, dass er sich in dem in den Außenschuh eingesetzten Zustand weiter in Richtung des Körpers eines potentiellen Schuhträgers des Diabetiker-Sicherheitsschuhs erstreckt als der Außenschuh-Schaft, also beispielsweise weiter in Richtung der Fußgelenke oder der Knie des Schuhträgers. Vorzugsweise ist wiederum das Material des Innenschuh-Schafts weicher als das Material des Außenschuh-Schafts, so dass der Außenschuh-Schaft einem Fuß Halt und Schutz vor mechanischen Einwirkungen aus der Umwelt verschafft, und damit eine eigentliche Kernaufgabe eines Sicherheitsschuhs erfüllt, nämlich den Schutz vor Verletzungen, die bei Unfällen auftreten können, wohingegen der weichere Innenschuh-Schaft den Fuß des Schuhträgers vor Druckstellen und Abschürfungen bewahrt und den Sicherheitsschuh dadurch als Diabetiker-Sicherheitsschuh geeignet macht. Durch das sich weiter in Richtung des Körpers eines potentiellen Schuhträgers erstreckende Material des Innenschuh-Schafts wird nun sichergestellt, dass dessen Fuß an keiner Stelle mit dem Material des Außenschuh-Schafts in Kontakt kommt, da immer Material des Innenschuh-Schafts zwischengelagert ist. Vorzugsweise ist der Innenschuh-Schaft verformbar, jedoch formstabil, so dass dessen vorgegebene Form ohne Einwirkung weiterer Kräfte beibehalten wird, der Innenschuh-Schaft also nicht formlabil ist. Durch die Formstabilität wird vorteilhaft erreicht, dass der Innenschuh-Schaft in einer Kontur bereitgestellt werden kann, die annähernd an die Kontur eines Fußes eines Schuhträgers angepasst ist, und beim Einführen eines Fußes nicht unkontrolliert Falten bildet, und durch die Verformbarkeit, vorzugsweise eine elastische Verformbarkeit, wird wiederum erreicht, dass sich der Innenschuh-Schaft individuell an die Form des Fußes des Schuhträgers anpassen kann. Im Gegensatz dazu besteht bei einem formlabilen Material die Gefahr, dass sich beim Einführen eines Fußes unkontrolliert Falten bilden, die wiederum zu unerwünschten Druckstellen am Fuß eines Schuhträgers führen können. Die Verformbarkeit des Innenschuhs ermöglicht es weiterhin bis zu einem gewissen Grad, insbesondere im Fersen- und bis hin zum Mittelfußbereich, den Innenschuh von innen nach außen zu stülpen, um eine erleichterte Inspektion auf Beschädigungen oder Verschmutzungen vornehmen zu können. Eine vollständige Inversion des Innenschuhs ist aufgrund der stützenden Vorderkappe der Regel nicht möglich.

Gemäß einer Ausführungsform ist der Innenschuh mittels eines Fixiermittels reversibel am Außenschuh fixierbar. Nicht beschränkende Beispiele für Fixiermittel sind Druckknöpfe, Haken und Ösen, Magnetfixiersysteme oder Klettvorrichtungen. Gemäß einer besonderen Weiterbildung ist das Fixiermittel in einem Bereich angebracht, in dem keine Belastung auf den Fuß durch das Gewicht des Trägers erfolgt. Ein Beispiel für einen derartigen Bereich ist eine Innenschuh-Zunge, die an der Außenschuh-Zunge reversibel fixierbar ist. Vorteilhaft wird somit ein für den Träger des Diabetiker-Sicherheitsschuhs leicht zugänglicher Bereich für die Fixierung gewählt und gleichzeitig sichergestellt, dass die Innenschuh-Zunge gegenüber der Außenschuh-Zunge nicht verrutschen kann, womit einer Faltenbildung in diesem Bereich und somit dem Auftreten von scheuergefährdeten Stellen entgegengewirkt wird. Gemäß einem besonderen Beispiel ist das Fixiermittel eine Klettvorrichtung, bei der vorzugsweise die Haken des Klettverschlusses an der Außenschuh-Zunge und die Schlaufen des Klettverschlusses an der Innenschuh-Zunge vorliegen, wodurch vorteilhaft ein Bereich gewählt ist, an dem das Fixiermittel wenig Druck auf den Fuß ausübt und somit die Gefahr von Druckstellen oder Scheuerstellen verringert wird. Die Außenschuh-Zunge kann in fachüblicher Weise als Unterlage für beispielsweise eine Schnürvorrichtung dienen.

Vorzugsweise weisen der Außenschuh-Schaft und der Innenschuh-Schaft des Diabetiker-Sicherheitsschuhs somit eine Außenschuh-Zunge bzw. eine Innenschuh-Zunge auf. Gemäß einer Ausführungsform ist die Innenschuh-Zunge bei einem in den Außenschuh eingesetzten Innenschuh um die Außenschuh-Zunge führbar und an der Außenseite der Außenschuh-Zunge reversibel fixierbar. Die Außenschuh-Zunge ist in der Regel aus einem im Vergleich mit der Innenschuh-Zunge härteren oder steiferen, also weniger verformbaren Material gebildet, um für den Fuß nach außen hin einen mechanischen Schutz bereitzustellen. Allerdings stellt ein derartiges härteres oder steiferes Material auch eine größere Verletzungsquelle für empfindliche Diabetikerfüße dar. Mittels der um die Außenschuh-Zunge führbaren und an der Außenschuh-Zunge fixierbaren Innenschuh-Zunge lässt sich die Außenschuh-Zunge gegenüber dem Fuß eines Trägers eines Diabetiker-Sicherheitsschuhs abpolstern. Insbesondere das in Richtung des Schienbeins weisende Ende der Außenschuh-Zunge kann Scheuerstellen auf der Haut eines Diabetikerfußes verursachen. Dementsprechend ist die Innenschuh-Zunge vorzugsweise um das in Richtung des Schienbeins zeigende Ende der Außenschuh-Zunge führbar und polstert den Fuß eines Benutzers im Bereich des Schuhrückens und/oder des Schienbein-Ansatzes gegenüber der von der Innenschuh-Zunge umgebenen Außenschuh-Zunge ab. Die Außenseite der Innenschuh-Zunge weist an ihrem um das Ende der Außenschuh-Zunge führbaren Ende vorzugsweise Schlaufen eines Klettverschlusses auf, die in Haken eines Klettverschlusses eingreifen, der an der Außenseite am Ende der Außenschuh-Zunge angebracht ist. Eine entsprechende umgekehrte Anordnung ist selbstverständlich ebenfalls möglich.

Gemäß einer Ausführungsform umfasst der Schaft des Außenschuhs des Diabetiker-Sicherheitsschuhs ein thermisch nachformbares Textilmaterial, welches einen Polyester und/oder ein Polyamid umfasst, beispielsweise in Form eines Gewebes oder Gewirkes. Ein Beispiel für ein entsprechendes Textilmaterial ist das unter der Bezeichnung Cordura^{®} als Polyamidversion oder als Polyesterversion vertriebene Textilmaterial des Herstellers Invista Technologies (St. Gallen, Schweiz). Beispielsweise handelt es sich bei dem Polyester und/oder dem Polyamid um einen thermoplastischen Polyester und/oder ein thermoplastisches Polyamid.

Eine thermische Nachformbarkeit wird gemäß einer Weiterbildung bereitgestellt durch Erwärmen auf die Erweichungstemperatur des Polyesters und/Polyamids, ein Formen in die gewünschte Form und anschließendes Absenken der Temperatur unter die Erweichungstemperatur.

Gemäß einer alternativen oder zusätzlichen Weiterbildung wird eine thermische Nachformbarkeit bereitgestellt durch ein Textilmaterial, welches einen Schmelzklebstoff umfasst. Beispielsweise sind die Fasern eines textilen Gewebes mit dem Schmelzklebstoff imprägniert. Wird die Temperatur des Textilmaterials soweit erhöht, dass der Schmelzklebstoff schmilzt, so kann der Faseranteil des Textilmaterials in die gewünschte Form gebracht werden, die er nach anschließendem Unterschreiten der Erstarrungstemperatur des Schmelzklebstoffs beibehält. Die Temperatur, bei der das Textilmaterial thermisch nachformbar sein soll, also die Schmelztemperatur des Schmelzklebstoffs und/oder die Erweichungstemperatur des Polyesters und/oder Polyamids, liegt oberhalb des Temperaturbereichs, bei dem der Diabetiker-Sicherheitsschuh eingesetzt wird.

Durch die thermische Nachformbarkeit wird die Möglichkeit bereitgestellt, den Außenschuh des Diabetiker-Sicherheitsschuhs optimal auf den Fuß eines Schuhträgers anzupassen, beispielsweise die gesamte oder im Wesentlichen gesamte Oberfläche des Außenschuh-Schafts, oder zumindest Teile davon, die anatomisch markante Stellen des Fußes abdecken, über den dazwischen gelagerten Innenschuh-Schaft in einen Vollkontakt mit dem Fuß zu bringen, um so Freiräume zu vermeiden oder zu verringern, die ihrerseits zu einer Verlagerung des Fußes gegenüber dem Innenschuh-Schaft und dem Außenschuh-Schaft und somit zu Reibung und zu Verletzungsmöglichkeiten führen könnten. Beispiele für entsprechende anatomisch markante Stellen, an denen eine optimale Anpassung der Oberfläche des Außenschuh-Schafts besonders vorteilhaft ist und die Gefahr von durch den Außenschuh-Schaft bedingten Druckstellen oder Scheuerstellen auf dem Fuß eines Trägers herabsetzt, sind der Bereich der Mittelfußknochen, insbesondere der Bereich der Basen der Mittelfußknochen, insbesondere die Basis des Mittelfußknochens V.

Das Textilmaterial kann wasserdicht und/oder atmungsaktiv beschichtet sein, um den Durchtritt von Wasser zu verhindern beziehungsweise den Durchtritt von Luft zu erleichtern. Gemäß einer besonderen Weiterbildung umfasst der Schaft des Außenschuhs das thermisch nachformbare Textilmaterial, vorzugsweise Cordura^{®}, welches mittels einer Schmelzklebstoffschicht mit einem Nadelvlies, vorzugsweise einem Polyester und/oder Polypropylen umfassenden Nadelvlies, laminiert ist, wobei überraschenderweise besonders gute thermische Nachformbarkeit festgestellt wurde.

Vorzugsweise ist das Material des Außenschuh-Schafts ESD-fähig (wobei "ESD" für "electrostatic discharge" steht) und kann somit in einem Diabetiker-Sicherheitsschuh zum Einsatz kommen, der insgesamt antistatische Eigenschaften aufweist.

Gemäß weiteren Ausführungsformen weist der Außenschuh wenigstens eines der Merkmale auf, die ausgewählt sind aus einer weitgehenden Nahtfreiheit, einer Metallfreiheit, und/oder einem Weitenfreiraum und/oder Höhenfreiraum im Bereich der Außenschuh-Schutzkappe von wenigstens 0,6 cm.

Unter einer weitgehenden Nahtfreiheit in Bezug auf den Außenschuh wird verstanden, dass der Außenschuh weniger Nähte hat als der Schaft eines herkömmlichen Schuhs, bei dem üblicherweise wenigstens drei Nähte, wie etwa 3 bis 10 Nähte, vorzufinden sind. Der Außenschuh gemäß dieser Ausführungsform kommt beispielsweise mit zwei Nähten, gemäß einer besonderen Weiterbildung mit einer einzigen Naht aus. Diese Naht befindet sich vorzugsweise im Fersenbereich und wird gesetzt, nachdem ein im Wesentlichen plattenförmiger Rohling des Außenschuhs in die Endform des Außenschuhs gebogen und an zwei Kanten vernäht wird. Durch die weitgehende Nahtfreiheit werden Unebenheiten auf der Oberfläche des Außenschuhs vermieden, die durch die Nahtbereiche verursacht werden und bei empfindlichen Diabetiker-Füßen zu Druckstellen, Eintrittspforten für Keime und somit Infektionsstellen führen können.

Bei einem metallfreien Außenschuh wird auf Bestandteile aus Metall verzichtet. Beispielsweise werden Ösen für Schnürsenkel, die üblicherweise aus Metall bestehen, aus einem Kunststoff, vorzugsweise aus einem wenig biegesteifen Kunststoff, hergestellt, oder als Textilösen oder Textilschlaufen ausgeführt. Dadurch ergeben sich wiederum Vorteile, da die harten Bestandteile aus Metall durch weichere Bestandteile ersetzt werden, so dass wiederum potentielle Druckstellen auf den Fuß des Trägers abgeschwächt oder ganz beseitigt werden. Zusätzlich oder alternativ ist die Außenschuh-Schutzkappe nicht aus einem Metall gefertigt, sondern beispielsweise aus einem Kunststoff, vorzugsweise aus einem biegesteifen Kunststoff, wodurch sich gegenüber der Verwendung von Metall insbesondere eine Gewichtsersparnis ergeben kann.

Diabetiker-Sicherheitsschuhe mit einem Weitenfreiraum und/oder einem Höhenfreiraum im Bereich der Außen-Schutzkappe, also der Außenschuh-Zehenschutzkappe, von wenigstens 0,6 Zentimeter (cm), beispielsweise wenigstens 0,7 cm, wenigstens 0,8 cm oder wenigstens 0,9 cm, wie etwa wenigstens 1,0 cm, verleihen der Fußspitze eines Trägers im Zehenbereich im Vergleich mit herkömmlichen Schuhen gemäß dem Stand der Technik eine deutlich größere Bewegungsfreiheit. Dadurch werden vorteilhaft Druckstellen durch Kontakt mit dem Außenschuh vermindert, und der Träger kann seine Zehen innerhalb der Schutzkappe unbehinderter bewegen, was die Durchblutung und somit die Fußgesundheit fördert. Darüber hinaus wird ausreichendes Volumen für Materialien zur Gestaltung einer optional vorhandenen Fußbettung bereitgestellt. Sofern der Diabetiker-Sicherheitsschuh vorgesehen ist für den Einsatz zusammen mit einer entnehmbaren Fußbettung, dann ist der Weitenfreiraum und/oder Höhenfreiraum bezogen auf den Weitenfreiraum bzw. den Freiraum, der nach Einführen einer entsprechenden Fußbettung im Innenschuh herrscht. Vorzugsweise ist vorgesehen, dass die stützende Vorderkappe an die Dimensionen der Außenschuh-Schutzkappe angepasst ist, also den durch die Außenschuh-Schutzkappe bereitgestellten Weitenfreiraum und/oder Höhenfreiraum so wenig wie möglich beschränkt.

Gemäß einer Ausführungsform weist die Außenschuh-Sohle des Diabetiker-Sicherheitsschuhs ein oder mehrere Merkmale auf, die ausgewählt sind unter einem mehrschichtigen Aufbau umfassend eine harte Laufsohle und eine im Vergleich zur Laufsohle weichere Zwischensohle; einem Gesamtaußenprofil der Laufsohle in Gestalt einer zurückverlegten Mittelfußrolle, vorzugsweise mit einem Scheitelpunkt innerhalb der Gelenksbelastungsfläche des Fußes eines Schuhträgers und/oder der vorderen Tarsalknochen; einem medial und/oder lateral ausgestellten Fersenabsatz; einem als Rollabsatz ausgestalteten Fersenabsatz; einer Laufsohle mit rutschfesten Eigenschaften; und/oder einer Profilstärke im Bereich von 3,5 bis 6,0 mm, wobei die Endpunkte dieses Bereichs, wie bei allen Bereichsangaben, als ebenfalls umfasst gelten.

Der mehrschichtige Aufbau kann insbesondere zweischichtig sein, wobei die harte Laufsohle vor Beschädigungen durch den Laufuntergrund schützt, durch ihre Härte abriebfest ist und wesentlich zur Gesamtbiegesteifheit der Sohle beiträgt. Die Laufsohle weist beispielsweise eine Härte nach Shore-A im Bereich von 50 bis 60 auf, wie etwa 52 bis 56, beispielsweise 54. Die Zwischensohle weist beispielsweise eine Härte nach Shore-A im Bereich von 40 bis 49 auf, wie etwa 42 bis 45. Die Laufsohle und die Zwischensohle können beispielsweise miteinander verklebt oder verschmolzen sein. Falls eine Zwischensohle vorliegt, so kann die Verbindung zwischen der Zwischensohle und der Außenschuh-Brandsohle kann über Vernähung, Verklebung und/oder Anschmelzung herbeigeführt sein.

Während im Vergleich mit einer Laufsohle mit Zehenrolle die Rolle bei einer Laufsohle mit Ballenrolle weiter in Richtung der Ferse verschoben ist, und wiederum im Vergleich mit einer Laufsohle mit Ballenrolle die Rolle bei einer Mittelfußrolle ebenfalls weiter in Richtung der Ferse verschoben ist, liegt bei dieser Ausführungsform des Diabetiker-Sicherheitsschuhs eine Rolle vor, die im Vergleich mit einer herkömmlichen Mittelfußrolle noch weiter in Richtung der Ferse verschoben ist. Eine Außenform der Laufsohle in Gestalt einer zurückverlegten Mittelfußrolle verringert im Gegensatz zu einer im Wesentlichen planen Laufsohle Belastungsspitzen während des Abrollens des Fußes beim Gehen. Das Gesamtaußenprofil der Laufsohle ist vorzugweise somit im Wesentlichen konvex. Unter dem Gesamtaußenprofil wird eine gedachte Hüllkurve in der Seitendraufsicht auf einen nicht mit dem Gewicht eines Trägers belasteten Schuh verstanden, wobei die Hüllkurve über die Erhebungen der Sohle verläuft, die mit einem Laufuntergrund in Kontakt sind. Im Gegensatz zu einer herkömmlichen Laufsohle mit Mittelfußrolle, bei welcher der Scheitelpunkt des konvexen Gesamtaußenprofils unterhalb des Mittelfußes liegt, ist hier der Scheitelpunkt weiter in Richtung der Belastungsfläche des Fußgelenks verlegt, wodurch vorteilhaft Scherkräfte im Fuß während des Abrollens verhindert werden. Beispielsweise befindet sich der Scheitelpunkt des konvexen Gesamtaußenprofils unterhalb der Belastungsfläche des Fußgelenks, oder/oder unterhalb der vorderen Tarsalknochen, wie etwa dem Os cuneiforme I, dem Os cuneiforme II, dem Os cuneiforme III, dem Os cuboideum und/oder dem Os naviculare, und/oder befindet sich im Übergangsbereich zwischen den Metatarsalknochen und den vorderen Tarsalknochen, bezogen auf einen Fuß, der in einen Diabetiker-Sicherheitsschuh entsprechender Schuhgröße eingeführt ist. Der Grad der Konvexität ist vorzugsweise gering, sodass beispielsweise bezogen auf eine Laufsohle ohne Berücksichtigung einer gegebenenfalls vorhandenen Absatzsprengung oder Spitzensprengung der Scheitelpunkt maximal 2 mm, insbesondere maximal 1 mm, wie etwa maximal 0,5 mm hervorsteht. Dadurch wird beim Laufen, womit eine Fortbewegung in jeglicher Geschwindigkeit verstanden wird, das Abrollen erleichtert, jedoch beim Stehen die Standfestigkeit und die gleichmäßige Belastung des Fußes nicht herabgesetzt. Bei einem mit einem ausgeprägten Schuhgelenk-Bereich ausgestalteten Diabetiker-Sicherheitsschuh, dessen Laufsohle unterhalb dieses Bereichs normalerweise keinen Kontakt mit dem Laufuntergrund haben würde, sind im Fall einer Laufsohle mit zurückverlegter Mittelfußrolle vorzugsweise ein oder mehrere Profilblöcke der Laufsohle im Schuhgelenk-Bereich vorgesehen, die bis zum Laufuntergrund reichen und zu der zurückverlegten Mittelfußrolle beitragen oder eine zurückverlegte Mittelfußrolle im Schuhgelenk-Bereich realisieren. Die Profilblöcke reichen bei einem auf einem Laufuntergrund abgestellten Außenschuh bis zur Fläche des Laufuntergrunds und stellen in der Belastungsphase beim Laufen einen Kontakt mit dem Laufuntergrund sicher. Somit wird das konvexe Gesamtaußenprofil der Laufsohle auch in diesem Bereich gewahrt und ermöglicht ein stetiges Abrollen des Diabetiker-Sicherheitsschuhs. Vorzugsweise erstrecken sich die Profilblöcke bei Betrachtung im Querschnitt nicht über die gesamte Breite der Laufsohle.

Eine erhöhte Absatzsprengung und/oder Spitzensprengung bezeichnet den Abstand der Unterkante des Fersenabsatzes bzw. des Schuhspitzenendes vom Laufuntergrund. Mit einer erhöhten Absatzsprengung und/oder Spitzensprengung wird der Aufprallschock beim Auftreffen der Ferse auf den Laufuntergrund bzw. beim Beenden der Abrollphase der Fußspitze verringert. Die Absatzsprengung und/oder Spitzensprengung liegen vorzugsweise in einem Bereich von 0,5 bis 2,5 cm, insbesondere einem Bereich von 0,7 bis 2,0 cm, oder 1,0 bis 2,0 cm, wie etwa 1,5 cm.

Ein medial und/oder lateral ausgestellter Fersenabsatz führt vorteilhaft zu einer verbesserten Standstabilität des Trägers eines Diabetiker-Sicherheitsschuhs. Der Grad des Ausstellens bleibt jedoch vorzugsweise so gering, dass der Kraftpfad des Beins eines Trägers des Diabetes-Sicherheitsschuhs noch innerhalb der Kontaktfläche der Laufsohle den Laufuntergrund schneidet.

Ein als Rollabsatz ausgestalteter Fersenabsatz, der zwangsläufig auch mit einer Absatzsprengung einhergeht, vermindert vorteilhaft den Aufprallschock beim Auftreffen der Ferse während des Laufens und führt zu einer gleichmäßigeren Lastverteilung während der Abrollbewegung der Laufsohle. Der Rollabsatz kann beispielsweise in Form einer konvex gekrümmten Oberfläche des Fersenabsatzes oder in Form einer stufenweise mehrfach abgewinkelten Oberfläche ausgebildet sein. Zur Verbesserung der Standsicherheit erstreckt sich gemäß einer Weiterbildung der als Rollabsatz ausgestaltete Fersenabsatz um bis zu 10 mm über eine entlang einer Schuh-Hinterkappe verlaufenden Linie hinaus, die lotrecht auf den Laufuntergrund trifft.

Eine Laufsohle mit rutschfesten Eigenschaften ist vorteilhaft für Diabetiker-Sicherheitsschuhe, wobei je nach Einsatzgebiet der Diabetiker-Sicherheitsschuhe verschiedene Kategorien von Rutschhemmung erfüllt werden, beispielsweise eine Rutschhemmung gemäß der Kategorie "SRA", die eine Rutschhemmung auf Keramikfliesen mit Reinigungsmitteln beschreibt, eine Rutschhemmung gemäß der Kategorie "SRB", die eine Rutschhemmung auf Stahlböden mit Glycerin beschreibt, oder eine Rutschhemmung gemäß der Kategorie "SRC", die eine Rutschhemmung auf Keramikfliesen mit Reinigungsmitteln und Stahlboden mit Glycerin beschreibt. Die verschiedenen Kategorien an Rutschhemmung können in einer an sich fachbekannten Weise durch die Wahl geeigneter Materialien für die Laufsohle erreicht werden und/oder durch die Gestaltung des Profils der Laufsohle erreicht werden.

Die Laufsohle weist vorzugsweise eine Profilstärke im Bereich von 3,5 bis 6,0 mm auf, beispielsweise 4,0 bis 5,5 mm, wie etwa 4,2 bis 5,0 mm, beispielsweise 4,5 mm.

Sofern der Diabetiker-Sicherheitsschuh ausgebildet ist als Schuh mit einem ausgeprägten Schuhgelenk-Bereich, unterhalb dessen normalerweise kein Kontakt mit dem Laufuntergrund stattfinden würde, so kann zur Vergrößerung der Trittfläche vorgesehen sein, dass die Laufsohle im Schuhgelenk-Bereich einen oder mehrere Profilblöcke aufweist, die bis zum Laufuntergrund reichen. Gemäß einer entsprechenden Ausführungsform weist die Laufsohle des Diabetiker-Sicherheitsschuhs einen Schuhgelenk-Bereich auf, wobei im Schuhgelenk-Bereich wenigstens ein Profilblock angeordnet ist, der sich bis in die gleiche Fläche erstreckt wie die dem Schuhgelenk-Bereich benachbarten Bereiche der Laufsohle, also eine Fläche, die mit dem Laufuntergrund in Kontakt treten kann. Bei diesen benachbarten Bereichen handelt es sich um den Laufsohlen-Fersenbereich und den Laufsohlen-Mittelfußbereich, insbesondere um die im Stand für den Kontakt mit einem Laufuntergrund vorgesehenen Bereiche der Laufsohle. Die im Schuhgelenk-Bereich unterbrochene Oberfläche der Laufsohle wird somit durch den oder die Profilblöcke wenigstens teilweise wieder ergänzt, da diese sich bis in die gleiche Fläche erstrecken wie die restlichen Anteile der Laufsohle bzw. deren profilgebende Anteile. Die Profilblöcke ergänzen vorteilhaft in ausreichendem Maße eine Lücke in der durch den Schuhgelenk-Bereich unterbrochenen Abrollfläche der Laufsohle. Dementsprechend erfolgt bei einer Laufbewegung ein durch den Schuhgelenk-Bereich nicht unterbrochenes Abrollen der Laufsohle des Diabetiker-Sicherheitsschuhs auf dem Laufuntergrund. Die Fläche, in welche sich der oder die Profilblöcke erstrecken, kann eine ebene Fläche sein, oder eine gekrümmte Fläche, beispielsweise eine konvex gekrümmte Fläche, und entspricht einer Fläche, die mit dem Laufuntergrund in Kontakt treten kann. Im Falle einer konvex gekrümmten Fläche liegt gemäß einer Ausbildungsform deren Scheitelpunkt innerhalb des Schuhgelenkbereichs. Darüber hinaus wird durch den oder die Profilblöcke vorteilhaft noch eine größere Trittfläche bereitgestellt, so dass eine bessere Rutschhemmung gewährleistet ist, was insbesondere für eine Laufsohle mit rutschfesten Eigenschaften wie vorstehend beschrieben vorteilhaft ist, wenn diese mit einem Schuhgelenk-Bereich ausgeführt ist. Vorzugsweise liegen wenigstens zwei oder wenigstens drei Profilblöcke vor. Gemäß einer Ausführungsform erstrecken sich die Profilblöcke bei Betrachtung im Querschnitt nicht über die gesamte Breite der Laufsohle im Schuhgelenk-Bereich und tragen damit zur Gewichtsersparnis des Diabetiker-Sicherheitsschuhs bei. Gemäß einer besonderen Ausführungsform sind Profilblöcke, die sich nicht über die gesamte Breite der Laufsohle im Schuhgelenk-Bereich erstrecken, bezogen auf den Querschnitt der Laufsohle nicht mittig angeordnet, sondern hin zum Innenrist verschoben. Dadurch wird eine bessere Standsicherheit zu verleihen, da üblicherweise beim Stehen ein Fuß die Tendenz hat, sich leicht in Richtung des Innenknöchels abzuwinkeln.

Das Material des Innenschuh-Schafts ist vorzugsweise ebenso wie das Material des Außenschuh-Schafts ESD-fähig, verhindert somit einen Spannungsaufbau und kann daher in einem Diabetiker-Sicherheitsschuh zum Einsatz kommen, der insgesamt antistatische Eigenschaften aufweist. Ein Ableiten angesammelter elektrischer Ladungen kann beispielsweise verstärkt werden über eine ESD-fähige Verbindungsnaht zwischen dem Innenschuh-Schaft und der Innenschuh-Brandsohle, beispielsweise eine Strobelnaht, etwa durch darin verarbeitete feine Metalldrähte, insbesondere Silberdrähte, wodurch die Verbindungsnaht diese Ladungen auf die Brandsohle der Außensohle ableiten kann.

Gemäß einer Ausführungsform weist der Innenschuh des Diabetiker-Sicherheitsschuhs ein oder mehrere Merkmale auf, die ausgewählt sind aus einer weitgehenden Nahtfreiheit, einer weitgehend faltenfreien Verarbeitbarkeit, einer hellen Innenoberfläche des Innenschuh-Schafts, einer antibakteriellen Innenoberfläche des Innenschuh-Schafts und/oder einer antibakterieller Oberfläche der Innenschuh-Brandsohle, einer Waschbarkeit zumindest bei niedrigen Temperaturen, einem Stabilisierungselement am oberen Rand des Innenschuh-Schafts, und/oder einem ein Abstandsgewirke umfassenden Innenschuh-Schaft.

Unter einer weitgehenden Nahtfreiheit des Innenschuh-Schafts wird verstanden, dass dieser nach Herstellung aus einem Rohling, der über Zusammennähen in eine Endform gebracht wird, vorzugsweise maximal drei Nähte aufweist, wobei Nähte zwischen dem Innenschuh-Schaft und der Innenschuh-Brandsohle nicht berücksichtigt werden. Der Innenschuh gemäß dieser Ausführungsform kommt beispielsweise mit drei Nähten, zwei Nähten, gemäß einer besonderen Weiterbildung mit einer einzigen Naht aus. Diese Naht befindet sich vorzugsweise unterhalb des Längsgewölbes eines in den Innenschuh eingeführten Fußes und wird gesetzt, nachdem ein im Wesentlichen plattenförmiger Rohling des Innenschuh-Schafts in die Endform des Innenschuhs gebogen und an zwei Kanten vernäht wird. Die gleiche Naht kann vorteilhaft noch verwendet werden, um eine gegebenenfalls vorliegende Innenschuh-Zunge mit dem Innenschuh-Schaft zu verbinden. Durch die weitgehende Nahtfreiheit werden Unebenheiten auf der Oberfläche des Innenschuhs vermieden, die bei empfindlichen Diabetiker-Füßen zu Druckstellen, Eintrittspforten für Keime und somit Infektionsstellen führen können. Insbesondere das Zusammennähen der beiden Kanten des Rohlings in einem Bereich, der im fertigen Innenschuh unterhalb des Längsgewölbes des Fußes zu liegen kommt, stellt vorteilhaft sicher, dass der Fuß des Trägers mit allenfalls geringem Druck auf die selbst dann noch vorhandene Naht aufsetzt, da der Druck des Fußes im Wesentlichen über die Ferse sowie über den Großzehenballen und den Kleinzehenballen auf den Untergrund abgeleitet wird.

Und einer weitgehenden faltenfreien Verarbeitbarkeit wird verstanden, dass das Material des Innenschuhs, insbesondere des Innenschuh-Schafts, keine oder wenig Falten erzeugt, wenn es in die endgültige Form gebracht wird. Eine entsprechende Verarbeitbarkeit kann beispielsweise bereitgestellt werden durch ein Material des Innenschuhs, das ein verformbares, vorzugsweise ein elastisch verformbares, und/oder dehnbares Obermaterial und/oder ein Abstandsgewirke umfasst, wodurch bei den Verbiegungen, die erforderlich sind, um das Material in die endgültige Form zu bringen, keine oder nur wenig Falten erzeugt werden.

Eine helle Innenoberfläche des Innenschuhs, beispielsweise des Innenschuhs-Schafts und/oder der Innenschuh-Brandsohle, ermöglicht vorteilhaft eine einfache Kontrolle durch den Träger, ob Flüssigkeitsabsonderungen auf die Innenoberfläche erfolgten. Bekanntermaßen stellen Wundsekrete ein häufiges Problem dar, mit dem sich Patienten mit sogenannten Diabetikerfüßen konfrontiert sehen. Diese Wundsekrete entstehen beispielsweise als Folge abgescheuerter Hautstellen und stellen selbstverständlich Nährböden für infektiöse Keime da. Auf dunklen Innenoberflächen von Schuhen sind derartige Stellen, auf denen eine Flüssigkeitsabsonderung, beispielsweise eine Absonderung von Wundsekreten erfolgte, nicht oder nur schwierig zu erkennen. Durch die Entnehmbarkeit des Innenschuhs aus dem Außenschuh wird ein entsprechendes Erkennen solcher Flüssigkeitsabsonderungen bereits deutlich erleichtert. Eine helle Innenoberfläche, die sich bei Kontakt mit einer Flüssigkeit, beispielsweise einem Wundsekret, viel deutlicher verfärbt als eine dunkle Innenoberfläche, erleichtert das Erkennen von Flüssigkeitsabsonderungen noch zusätzlich, und erleichtert das Feststellen abgesonderter Wundsekrete selbst dann, wenn der Innenschuh gar nicht aus dem Außenschuh entnommen wird. Besteht die Innenoberfläche des Innenschuhs aus mehreren Lagen, beispielsweise im Falle eines Innenschuh-Schafts, der aus mehreren Lagen besteht, so genügt es, wenn lediglich die tatsächlich zum Fuß weisende Innenoberfläche hell ausgestaltet ist. Als helle Innenoberflächen werden insbesondere weiße, beigefarbene, hellgraue, hellbraune oder silberfarbene Oberflächen angesehen, und/oder Oberflächen mit einem L-Wert gemäß dem L*a*b*-Farbraum der europäischen Norm ISO 11664-4 von wenigstens 50, wie etwa wenigstens 60, wenigstens 75, insbesondere wenigstens 85. Nicht beschränkende Beispiele für entsprechende helle Innenoberflächen sind solche mit einem L-Wert, der ausgewählt ist aus einem Bereich von 60 bis 100, einem a-Wert, der ausgewählt ist aus einem Bereich von -50 bis +50, sowie einem b-Wert, der ausgewählt ist aus einem Bereich von -50 bis +50, wie beispielsweise helle Innenoberflächen mit einem L-Wert, der ausgewählt ist aus einem Bereich von 75 bis 100, einem a-Wert, der ausgewählt ist aus einem Bereich von -30 bis +30, sowie einem b-Wert, der ausgewählt ist aus einem Bereich von -30 bis +30, wie etwa helle Innenoberflächen mit einem L-Wert, der ausgewählt ist aus einem Bereich von 80 bis 100, einem a-Wert, der ausgewählt ist aus einem Bereich von -10 bis +10, und einem b-Wert, der aus der Welt ist aus einem Bereich von -10 bis +10. Ein Beispiel für eine derartige helle Oberinnenoberfläche ist eine solche mit einem L Wert von 82 ± 3, einem a-Wert von -3 ± 3, und einem b-Wert von 0 ± 3.

Gegebenenfalls auch ungeachtet des L-Wertes und/oder des a-Wertes und/oder des b-Wertes werden als helle Oberflächen solche angesehen, deren Farben gemäß dem RAL-Farbsystem (RAL gemeinnützige GmbH, 53757 Sankt Augustin, Deutschland) die sich aus der nachfolgenden Aufzählung ergebenden RAL-Nummern tragen und/oder als dazu identische Farben wahrgenommen werden und/oder von einem Betrachter als zwischen dem Farbeindruck zweier dieser Farben liegend wahrgenommen werden: 1000 bis 1037, 1039, 1040, 2000 bis 2012, 3012, 3014, 3015, 3017,3018, 3022, 3024, 3026, 4003, 4005, 4009, 4010, 5014, 5024, 6011, 6013, 6017 bis 6019, 6021, 6024, 6025, 6027, 6032, 6034, 6037,6038, 6040, 7000 bis 7006, 7008, 7023, 7027, 7030, 7032 bis 7038, 7040, 7042, 7044 bis 7048, 7050, 8001, 8020, 8023, 8031, 9001 bis 9003, 9006 bis 9010, 9016, 9018, 9020, 9022, 9023. Gemäß einer besonderen Ausführungsform sind die Farben ausgewählt aus einer oder mehreren Farben, deren Farbeindruck den Farben mit den nachfolgenden RAL-Nummern entspricht und/oder von einem Betrachter als zwischen dem Farbeindruck zweier dieser Farben liegend wahrgenommen wird, insbesondere als zwischen dem Farbeindruck zweier Farben mit unmittelbar aufeinanderfolgenden RAL-Nummern liegend wahrgenommen wird: 1000 bis 1007, 1012 bis 1018, 1021, 1023, 1026, 1028 bis 1035, 1037, 1039, 1040, 2000, 2003, 2004, 2007 bis 2012, 3012, 3014, 3015, 3017, 3018, 3022, 3024, 3026, 4003, 4005, 4009, 4010, 5014, 5024, 6011, 6013, 6019, 6021, 6027, 6034, 6040, 7000 bis 7005, 7023, 7027, 7030, 7032 bis 7038, 7040,7042, 7044 bis 7048, 7050, 8020, 8031, 9001 bis 9003, 9006, 9007, 9010, 9016, 9018, 9020, 9022, 9023. Gemäß einer weiteren besonderen Ausführungsform umfasst die Farbe der Innenoberfläche einen geringen Gelb- und/oder Rotanteil, um Wundsekrete mit einem in der Regel gelblichen Farbstich, gegebenenfalls mit einem zusätzlichen Rotanteil durch Blutanteile, besser kenntlich zu machen. Beispielsweise sind für diese besondere Ausführungsform die Farben ausgewählt aus einer oder mehreren Farben, deren Farbeindruck den Farben mit den nachfolgenden RAL-Nummern entspricht und/oder von einem Betrachter als zwischen dem Farbeindruck zweier dieser Farben liegend wahrgenommen wird, insbesondere als zwischen dem Farbeindruck zweier Farben mit unmittelbar aufeinanderfolgenden RAL-Nummern liegend wahrgenommen wird: 1000, 1013 bis 1015, 6011, 6013, 6019, 6021, 6027, 6034, 7000 bis 7005, 7023, 7030, 7032 bis 7038, 7040, 7042, 7044 bis 7048, 9001 bis 9003, 9006, 9007, 9010, 9016, 9018, 9020, 9022, 9023. Gemäß einer weiteren besonderen Ausführungsform umfasst die Farbe der Innenoberfläche keine bunte Farbe und/oder umfasst einen grünen Farbanteil, wobei Beispiele für Farben gemäß dieser weiteren besonderen Ausführungsform ausgewählt sind aus einer oder mehreren Farben, deren Farbeindruck den Farben mit den nachfolgenden RAL-Nummern entspricht und/oder von einem Betrachter als zwischen dem Farbeindruck zwei dieser Farben liegend wahrgenommen wird, insbesondere als zwischen dem Farbeindruck zweier Farben mit unmittelbar aufeinanderfolgenden RAL-Nummern liegend wahrgenommen wird: 1000 bis 1002, 6011, 6013, 6019, 6021, 6025, 6027, 6034, 6040, 7000 bis 7006, 7008, 7023, 7027, 7030, 7033 bis 7038, 7040, 7042, 7044 bis 7048, 7050, 9001 bis 9003, 9006, 9007, 9010, 9016, 9018, 9020, 9023.

Die helle Innenoberfläche umfasst eine oder mehrere der als hell definierten Farben, beispielsweise einen Gesamtbereich mit einer einzigen Farbe, oder mehrere Bereiche mit unterschiedlichen Farben. Bei der Beurteilung der Oberflächenhelligkeit können untypische Abweichungen, beispielsweise verursacht durch Aufdrucke mit etwa Herstellerangaben oder Schuhgrößenangaben, oder verursacht durch Metallfäden zur Bereitstellung einer antibakteriellen Oberfläche, außer Betracht bleiben.

Eine antibakterielle Innenoberfläche des Innenschuhs, beispielsweise eine antibakterielle Innenoberfläche des Innenschuh-Schafts und/oder der Innenschuh-Brandsohle, trägt vorteilhaft dazu bei, dass das Einnisten von Bakterien im Innenschuh verhindert oder zumindest erschwert wird. Ein Beispiel für eine antibakterielle Innenoberfläche ist eine solche, die Silberfäden und/oder Kupferfäden aufweist.

Eine Waschbarkeit des Innenschuhs zumindest bei niedrigen Temperaturen, worunter Temperaturen von Raumtemperatur bis etwa 40°C, beispielsweise Temperaturen von etwa 30°C verstanden werden, ermöglicht im Zusammenhang mit der Entnehmbarkeit des Innenschuhs eine Reinigung. Insbesondere können dadurch Keime ausgewaschen werden, oder Verschmutzungen, beispielsweise die schon erwähnten Flüssigkeitsabsonderungen oder insbesondere Wundsekret-Absonderungen, die ihrerseits wiederum als Nährboden für Keime dienen können, ausgewaschen werden. Eine Waschbarkeit bei zumindest niedrigen Temperaturen umfasst die Möglichkeit, dass Zusätze verwendet werden können, die zu einer chemischen Reinigung führen und/oder eine chemische Reinigung im engeren Sinne durchgeführt wird, also in einem nicht wässrigen Lösungsmittel. In Kenntnis des hier offenbarten Erfindungsgedankens ist der Fachmann ohne weiteres in der Lage, die für die Herstellung des Innenschuhs verwendeten Materialien so auszuwählen, dass der Innenschuh zumindest bei niedrigen Temperaturen waschbar ist. Vorzugsweise beinhaltet eine Waschbarkeit mit niedrigen Temperaturen auch eine vollständige oder zumindest weitgehende Beibehaltung der Dimensionen des Innenschuhs nach einem oder wiederholten Waschvorgängen, beispielsweise eine Änderung in Bezug auf die ursprüngliche Länge, Weite und/oder Breite von maximal 5 %, insbesondere maximal 3 %, maximal 2 %, maximal 1%, maximal 0,5% oder maximal 0,1%, um nicht durch Änderungen der Dimensionen des Innenschuhs nach dem Waschen wiederum das Problem der Faltenbildung zu verstärken.

Ein Stabilisierungselement am oberen Rand des Innenschuh-Schafts trägt vorteilhaft dazu bei, die Form des Innenschuh-Schafts zu stabilisieren und/oder Beschädigungen durch Abnutzung zu vermeiden. Beispiele für Stabilisierungselemente sind Säume, also umgeschlagene Kanten des Materials des Innenschuh-Schafts, die an diesem fixiert, beispielsweise vernäht werden, oder zusätzlich am oberen Rand des Innenschuh-Schafts fixierte Texilien, beispielsweise mit dem Rand verklebte oder vernähte Textilien. Durch den dabei gebildeten Wulst werden Kanten des Innenschuh-Schafts abgemildert. Die für ein Vernähen verwendete Naht kann eine von zwei Nähten eines weitgehend nahtfreien Innenschuh-Schafts sein, wobei die andere Naht gemäß den vorstehenden Angaben verwendet wird, um den Innenschuh-Schaft in seiner Endform zu halten.

Ein Innenschuh mit einem ein Abstandsgewirke umfassenden Innenschuh-Schaft ist durch das Abstandsgewirke vorteilhaft gut verformbar und ermöglicht eine gute Durchlüftung, die einer Feuchtigkeitsbildung entgegenwirkt und somit die Lebensbedingungen für Keime verschlechtert.

Gemäß einer Ausführungsform umfasst der Innenschuh-Schaft wenigstens ein verformbares, vorzugsweise ein elastisch verformbares Textilmaterial und/oder ein Elastomer-Material, beispielsweise Verbunde daraus, oder besteht daraus. Nicht-beschränkende Beispiele für Textilien sind Gewebe, Gewirke, Gestricke, Geflecht, Filze, Nähgewirke und Vliese, die aus Naturfasern und/oder Kunstfasern hergestellt sein können. Nicht-beschränkende Beispiele für Materialien, die für die Textilmaterialien verwendbar sind, sind Kunstfasern aus Polyamid, wie beispielsweise Nylon, Polyester, Polyacrylamid, oder Naturfasern wie etwa Baumwolle, tierische Wolle oder Seide, oder Mischfasern aus zwei oder mehr der vorgenannten Materialien. Nicht beschränkende Beispiele für Elastomer-Materialien sind Naturkautschuk oder auch Synthese-Kautschuk, wie etwa Acryl-Butadien-Kautschuk, Acryl-Kautschuk, Butadien-Kautschuk, Chlor-Butadien-Kautschuk (CR), Isopren-Kautschuk (IR), Ethylen-Propylen-Dien-Kautschuk (EPDM, Fluorkautschuk (FKM), Nitril-Butadien-Kautschuk (NBR), Silikon-Kautschuk (SIR), Styrol-Butadien-Kautschuk (SBR), oder Gemische zweier oder mehrerer Vertreter davon, wobei die gegebenenfalls in Klammern angegebenen Bezeichnungen die Kürzel gemäß IUPAC darstellen. In Abhängigkeit von dem geplanten Einsatzgebiet des Diabetiker-Sicherheitsschuhs kann der Fachmann in Abhängigkeit ein geeignetes Elastomer-Material aufgrund von dessen bekannter Eigenschaften auswählen, beispielsweise lösungsmittelbeständige Elastomere für Diabetiker-Sicherheitsschuhe, die während ihrer Verwendung Lösungsmitteldämpfen ausgesetzt sind. Sofern der Innenschuh-Schaft ein Gewirke umfasst, so kann dieses insbesondere wiederum als Abstandsgewirke ausgebildet sein. Zusätzlich zu und unabhängig von den Vorteilen, die sich daraus für eine weitgehend faltenfreie Verarbeitbarkeit ergeben, wirkt sich ein Abstandsgewirke auch vorteilhaft auf die Druckbelastung eines in dem Innenschuh-Schaft befindlichen Fußes aus. Normalerweise hält ein Abstandsgewirke mittels Polfäden eine bestimmte Dicke ein. Wird jedoch ein Druck auf das Abstandsgewirke ausgeübt, so können sich die Polfäden verformen und dem Druck nachgeben. Vorteilhaft wird dadurch der Druck, den wiederum der Innenschuh-Schaft auf einen Fuß ausübt, abgemildert. Weiterhin sorgt das Abstandsgewirke vorteilhaft für einen besseren Luftaustausch, und damit für ein trockeneres Schuh-Innenklima, welches wiederum die Wachstumsbedingungen für Keime verschlechtert.

Gemäß einer Ausführungsform umfasst der Innenschuh-Schaft einen mehrlagigen, von der Colortex GmbH (Blocksbergstraße 157, 66955 Pirmasens) in Zusammenarbeit mit dem Prüf- und Forschungsinstitut Pirmasens e.V. (Marie-Curie-Straße 19, 66953 Pirmasens) entwickelten Textilverbund, welcher ein dehnbares und leitfähiges Kettengewirke, ein mittiges Abstandsgewirke, eine elastische Polyurethan-Membran, eine perforierte, mit Nylon-Jersey kaschierten Neopren-Lage, sowie elastische Klebeschichten aufweist (gefördert gemäß den Projektnummern ZIM KU 2514502AK4 für die Colortex GmbH, Colortex GmbH, Blocksbergsstraße 157, 66955 Pirmasens, sowie ZIM KU 2515404AK4 für das Prüf- und Forschungsinstitut Pirmasens e.V., Marie-Curie-Straße 19,66953 Pirmasens, wobei das Projekt ZIM, auf dessen vorstehende Förderprojekte Bezug genommen wird, ein Projekt des Bundesministeriums für Wirtschaft und Energie ist). Auf die diesbezügliche Offenbarung, die einsehbar ist unter dem Projekttitel "Entwicklung von innovativen Innenfutter-Schaft-Systemen für Diabetiker-Schuhe unter Berücksichtigung hygienisch relevanter Parameter" unter der Internetseite des Prüf- und Forschungsinstitut Pirmasens e.V. (http://www.pfi-biotechnology.de/de/projekte.html) oder unter der vorstehend angegebenen Adresse dieses Instituts angefordert werden kann, wird vollumfänglich Bezug genommen.

Dieser mehrlagige Textilverbund weist dementsprechend ein dehnbares und leitfähiges Kettengewirke, ein mittiges Abstandsgewirke, eine elastische Polyurethan-Membran, die beispielsweise eine hohe Dehnbarkeit im Bereich von 500 % bis 600% Prozent aufweist, eine perforierte, mit Nylon-Jersey kaschierte Neoprenlage, sowie elastische Klebeschichten auf, die vorzugsweise atmungsaktiv ausgebildet sind. Das Kettengewirke weist zur Hautseite, also zur Innenseite des Innenschuh-Schafts, und stellt somit die Kontaktfläche zum Fuß eines Trägers des Diabetiker-Sicherheitsschuhs bzw. zu einer von diesem getragenen Socke dar. Für das Kettengewirke werden somit vorzugsweise helle Materialien verwendet, da es im Wesentlichen die Innenoberfläche des Innenschuhs darstellt, die vorteilhaft eine helle Oberfläche aufweisen soll. Das Kettengewirke ist mittels eingearbeiteter Silberfäden leitfähig, womit es zum Ableiten von elektrischen Ladungen dienen kann und somit zu den ESD-Eigenschaften des Innenschuhs beiträgt. Vorteilhaft weisen die Silberfäden auch eine bakterienhemmende Wirkung auf und stellen eine Möglichkeit dar, eine antibakterielle Innenoberfläche des Innenschuhs wie vorstehend beschrieben, zu realisieren. Das Kettengewirke weist vorzugsweise eine definierte Dehnbarkeitsgrenze auf, beispielsweise eine Dehnbarkeitsgrenze, die in Längsrichtung im Mittel 45 % und in Querrichtung im Mittel 160 % beträgt. Durch das Kettengewirke wird eine Dehnbarkeitsgrenze des textilen Verbunds maßgeblich vorgegeben. Das Abstandsgewirke stellt durch seinen hohen Luftanteil neben der Möglichkeit, bei Druckbelastungen nachzugeben und dadurch den Druck auf den Fuß zu verringern, wiederum eine vorteilhafte Möglichkeit für einen guten Lufttransport innerhalb des Innenschuhs und damit ein günstiges Innenschuh-Klima dar. Die elastische Polyurethan-Membran dient als Barriere für Sekrete und Dampf. Die perforierte, mit Nylon-Jersey kaschierte Neopren-Schicht ist schuhseitig angeordnet, weist also zur Außenseite des Innenschuhs. Sie dient als Stoßdämpfer und Wärmepuffer und lässt durch ihre Poren einen Feuchtigkeitstransport von der Außenseite des Innenschuhs in Richtung der Innenseite zu. Die elastischen Klebeschichten verbinden das Kettengewirke mit dem Abstandsgewirke, das Abstandsgewirke mit der Polyurethan-Membran, und die Polyurethan-Membran mit der Neopren-Lage. Der mehrlagige Textilverbund weist eine gute Waschbeständigkeit auf und ermöglicht optional eine 3D-Bedruckung mit TPU 70, einem thermoplastischen Polyurethan. Ein Innenschuh-Schaft, der einen solchen mehrlagigen Textilverbund aufweist oder daraus besteht, fängt vorteilhaft Druck ab, wirkt bakterienhemmend bei gleichzeitigen ESD-Eigenschaften und ist waschbar. Mit einem derartigen Textilverbund lässt sich gemäß einem bevorzugten Beispiel ein bei niedrigen Temperaturen waschbarer Innenschuh bereitstellen.

Gemäß einer Ausführungsform weist der Innenschuh-Schaft eine Innenschuh-Zunge sowie wenigstens eine über die Innenschuh-Zunge führbare Innenschuh-Seitenlasche, vorzugsweise zwei über die Innenschuh-Zunge führbare Innenschuh-Seitenlaschen auf. Diese Innenschuh-Seitenlasche greift beim Tragen des Diabetiker-Sicherheitsschuhs von der Seite über die Außenschuh-Zunge und verhindert somit ein seitliches Verrutschen der Außenschuh-Zunge in die entsprechende Richtung, wobei zwei Innenschuh-Seiten laschen ein seitliches Verrutschen in beide Richtungen verhindern oder erschweren können, welches andernfalls erfolgen und zu einem unangenehmen Druckempfinden bzw. zu Druckstellen am Fußrücken des Schuhträgers führen könnte. Insbesondere wenn die Außenschuh-Zunge und die Innenschuh-Zunge ein Fixiermittel aufweisen und miteinander fixierbar sind, kann bei einer um die Außenschuh-Zunge herumgeführten Innenschuh-Zunge und den von der Seite her um die Außenschuh-Zunge greifenden Innenschuh-Seitenlaschen ein Verrutschen der Außenschuh-Zunge besonders effektiv verringert oder verhindert werden. Gemäß einer Weiterbildung sind alternativ oder zusätzlich zu dem Fixiermittel, mit dem die Außenschuh-Zunge und die Innenschuh-Zunge miteinander fixierbar sind, ein oder mehrere Seitenlaschen-Fixiermittel vorgesehen, mittels derer die Seitenlaschen an der Innenschuh-Zunge und/oder an der Außenschuh-Zunge und/oder an der Innenseite des Außenschuh-Schafts fixierbar sind.

Gemäß einer weiteren Ausführungsform umfasst der Innenschuh des Diabetiker-Sicherheitsschuhs eine entnehmbare Fußbettung. Die Fußbettung weist gemäß einer Weiterbildung eine antibakterielle Oberseite auf, wobei unter der Oberseite die der Fußsohle eines Trägers des Schuhs zugewandte Seite verstanden wird. Ein Beispiel für eine derartige antibakterielle Oberseite ist ein antibakterieller Bezug, beispielsweise ein Gewirke, beispielsweise ein Kuliergewirke oder insbesondere ein Kettengewirke, das silberhaltige und/oder kupferhaltige Fäden umfasst, beispielsweise Silberfäden und/oder Kupferfäden, oder silberbeschichtete und/oder kupferbeschichtete Kunststoff- oder Naturfasern. Durch die antibakterielle Oberseite wird ein Einnisten von Bakterien verhindert oder erschwert. Die antibakterielle Oberseite ist beispielsweise als Bezug auf die Fußbettung aufgebracht, vorzugsweise nicht lösbar aufgebracht, und ist vorzugsweise im Bedarfsfall ebenso wie die Fußbettung selbst waschbar, vorzugsweise bei niedrigen Temperaturen.

Die Fußbettung ist vorzugsweise mehrlagig aufgebaut, wobei sich an die der Fußsohle zugewandten antibakteriellen Oberseite in Richtung zum Laufuntergrund hin mindestens zwei, insbesondere mindestens drei Lagen verschiedener Polsterschichten unterschiedlicher Härten anschließen, darunter vorzugsweise eine Schaumstofflage und eine Lage aus einem elastischen Kunststoff. Die Schaumstofflage dient in erster Linie zur Stoßabsorption, und die darunter befindliche Lage aus einem elastischen Kunststoff, vorzugsweise einem Polyurethan, als Tragekörper.

Alternativ oder zusätzlich weist die Oberseite der Fußbettung eine helle Farbe auf, wobei auf die Ausführungen zu hellen Farben, die im Zusammenhang mit der Innenoberfläche des Innenschuhs gemacht wurden, analog Bezug genommen wird. Sofern sowohl die Innenoberfläche des Innenschuhs als auch die der Fußsohle zugewandte Oberfläche der Fußbettung eine helle Farbe aufweisen, so können die gleiche helle Farbe oder voneinander abweichende helle Farben verwendet werden.

Die Innenschuh-Brandsohle ist vorzugsweise härter und damit weniger verformbar als der Innenschuh-Schaft. Beim Einführen der Fußbettung in den Innenschuh kann die Innenschuh-Brandsohle somit als Einführhilfe dienen und ein Führen der Fußbettung in die endgültige Position ermöglichen, wobei wiederum eine unerwünschte Faltenbildung minimiert wird. Vorzugsweise sind die Oberflächenkonturen der einander gegenüberliegenden Oberflächen der Innenschuh-Brandsohle und der Fußbettung auf einander abgestimmt, sodass eine gleichmäßige Druckbelastung durch die Fußbettung auf die Innenschuh-Brandsohle erfolgt und auch dadurch eine unerwünschte Faltenbildung minimiert wird.

Der hierin beschriebene Diabetiker-Sicherheitsschuh kann als Schuhform insbesondere die eines Halbschuhs, eines niedrigen Stiefels, eines halbhohen Stiefels, eines hohen Stiefels oder eines oberschenkelhohen Stiefels gemäß den in der Norm DIN EN ISO 20345:2012-04 gezeigten Schuhformen aufweisen, vorzugsweise die Schuhform eines Halbschuhs, eines niedrigen Stiefels oder eines halbhohen Stiefels, besonders bevorzugt eines Halbschuhs oder eines niedrigen Stiefels, ganz besonders bevorzugt die Schuhform eines Halbschuhs.

Die Aufgabe ist gemäß einem zweiten Aspekt gelöst durch einen Außenschuh zur Verwendung für einen Diabetiker-Sicherheitsschuh wie hierin beschrieben, wobei der Außenschuh eines oder mehrere der Merkmale wie hierin im Zusammenhang mit Außenschuhen beschrieben aufweist.

Die Aufgabe ist gemäß einem dritten Aspekt gelöst durch einen Innenschuh zur Verwendung für einen Diabetiker-Sicherheitsschuh wie hierin beschrieben, wobei der Innenschuh eines oder mehrere der Merkmale wie hierin im Zusammenhang mit in den Innenschuhen beschrieben aufweist, beispielsweise ein Innenschuh mit einem ein Abstandsgewirke umfassenden Innenschuh-Schaft, insbesondere ein Innenschuh-Schaft der einen mehrlagigen Textilverbund umfasst, welcher ein dehnbares und leitfähiges Kettengewirke, ein mittiges Abstandsgewirke, eine elastische Polyurethan-Membran, eine perforierte, mit Nylon-Jersey kaschierte Neopren Lage sowie elastische Klebeschichten aufweist.

Die Aufgabe ist gemäß einem vierten Aspekt gelöst durch ein Verfahren zur Anpassung eines hierin beschriebenen Diabetiker-Sicherheitsschuhs an die Fußform eines dafür vorgesehenen Trägers, wobei das Verfahren folgende Schritte umfasst: Bestimmung der Schuhform des Außenschuhs des Diabetiker-Sicherheitsschuhs an wenigstens einem Schuhbereich; Bestimmen der Fußform des für den Diabetiker-Sicherheitsschuh vorgesehenen Trägers an wenigstens einem Fußbereich, welcher dem Schuhbereich des Außenschuhs entspricht; Bestimmen der Abweichung oder Abweichungen der Schuhform von der Fußform; lokales Erwärmen des thermisch nachformbaren Textilmaterials des Außenschuhs auf eine Temperatur, die eine Nachformbarkeit ermöglicht; lokales Verformen des Textilmaterials an der lokal erwärmten Stelle unter Verringerung der Abweichung der Schuhform in dem Schuhbereich von der Fußform in dem Fußbereich; Abkühlen der lokal erwärmten Stelle des Textilmaterials auf eine Temperatur, unterhalb welcher keine Nachformbarkeit mehr möglich ist.

Das lokale Verformen kann mehrmals wiederholt werden, vorzugsweise so oft, bis die Schuhkontur auf die Fußform des Trägers zufriedenstellend abgestimmt ist. Beispielsweise wird, abgesehen vom Zehenbereich, ein Vollkontakt des Fußes mit der gesamten oder im Wesentlichen gesamten Oberfläche des Außenschuh-Schafts mit dem Fuß angestrebt, oder ein Kontakt an anatomisch markanten Stellen, um so Reibung eines mit zu viel Freiraum in Diabetiker-Sicherheitsschuh angeordneten Fußes zu vermeiden oder zu verringern.

Das Bestimmen der Schuhform bzw. der Fußform kann auf verschiedene Arten erfolgen. Beispielsweise können herkömmliche Längenmessungen vorgenommen werden, oder 3D-Modelle des Außenschuhs bzw. des Fußes des Schuhträgers vorgenommen werden, etwa mittels 3D-Laserscan. Alternativ können beispielsweise mittels eines druckempfindlichen Papiers oder Kunststoffs Druckstellen zwischen dem Fuß und dem Außenschuh festgestellt werden. Weitere Systeme sind dem Fachmann bekannt, beispielsweise Messsysteme der Firma Rothballer (Weiden, Deutschland). Eine weitere Möglichkeit besteht in der Befragung des Trägers, an welchen Schuhbereichen zu weite Räume bzw. Drucckontakt wahrgenommen werden. Die Bestimmung der Schuhkontur des Außenschuhs und der Fußkontur des Schuhträgers können somit in einem gemeinsamen Schritt erfolgen. Gemäß einer Weiterbildung ist vorgesehen, dass sich der Fuß des Schuhträgers bei der Bestimmung der Schuhkontur im Innenschuh befindet.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

### Es zeigen:

- Fig. 1: eine schematische räumliche Ansicht eines Diabetiker-Sicherheitsschuhs mit seinen Teilen
- Fig. 2: eine schematische räumliche Ansicht eines Innenschuhs,
- Fig. 3: eine schematische räumliche Ansicht eines Innenschuhs, in den eine Fußbettung eingesetzt wird,
- Fig. 4: in einer schematischen räumlichen Ansicht einen Innenschuh, der in einen Außenschuh eingesetzt wird,
- Fig. 5: einen in einen Außenschuh eingesetzten Innenschuh,
- Fig. 6: den in den Außenschuh eingesetzten Innenschuh mit fixierter Innenschuh-Zunge,
- Fig. 7: einen Innenschuh mit zwei Seitenlaschen und einer Innenschuh-Zunge
- Fig. 8: den Innenschuh aus Fig. 7 mit der Innenschuh-Zunge an anderer Position
- Fig. 9: den Innenschuh aus Fig. 8 in einem Außenschuh
- Fig. 10: einen Längsschnitt eines Außenschuhs
- Fig. 11: einen schematischen Querschnitt durch einen Außenschuh,
- Fig. 12: eine schematische Draufsicht auf eine Außenschuh-Laufsohle,
- Fig. 13: eine schematische Draufsicht auf ein Außenschuh-Schaft-Material und ein Außenschuh-Zungen-Material
- Fig. 14: eine schematische Draufsicht auf ein Innenschuh-Schaft-Material und ein Innenschuh-Zungen-Material,
- Fig. 15: einen schematischen Längsschnitt durch einen Diabetiker-Sicherheitsschuh,
- Fig. 16: den schematischen Längsschnitt aus Fig. 15 mit einer um die Außenschuh-Zunge führbaren Innenschuh-Zunge, und
- Fig. 17: den schematischen Längsschnitt aus Figur mit zusätzlicher Fußbettung.

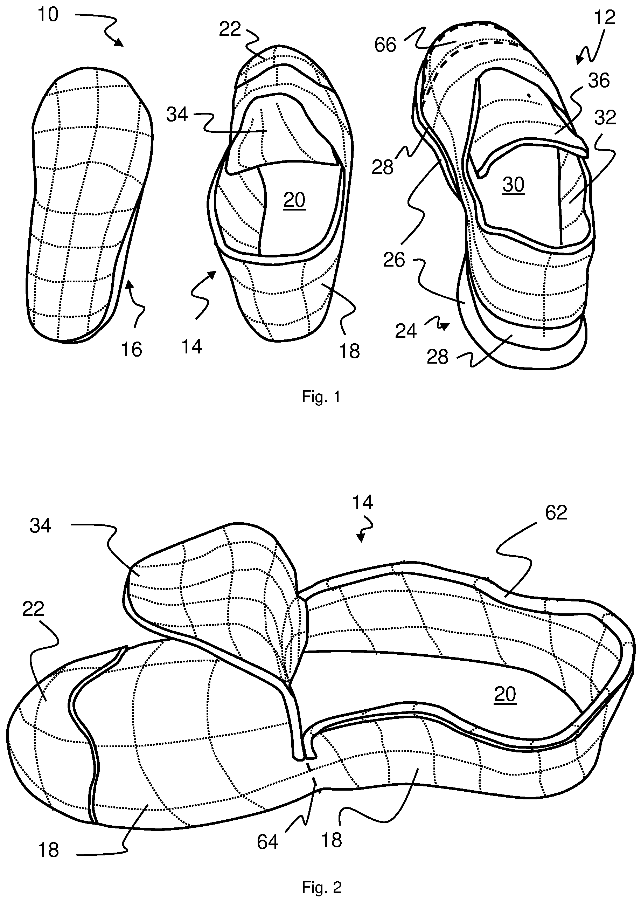

**Figur 1** zeigt eine schematische räumliche Ansicht eines Diabetiker-Sicherheitsschuhs 10 mit seinen Teilen, nämlich einem Außenschuh 12 und einem Innenschuh 14, sowie einer optional noch zusätzlich vorhandenen Fußbettung 16. Die Fußbettung 16 kann in den Innenschuh 14 eingeführt werden, der wiederum in den Außenschuh 12 eingeführt werden kann. Die punktierten Hilfslinien dienen lediglich zur Veranschaulichung der beispielhaften dreidimensionalen Oberflächengeometrie. Vorzugsweise ist vorgesehen, dass der Innenschuh 14 zusammen mit der Fußbettung 16 verwendet wird, wobei der Innenschuh 14 bei dieser gemeinsamen Verwendung so dimensioniert ist, dass er zusätzliches Volumen für die Fußbettung 16 bietet.

Der Innenschuh 14 umfasst einen Innenschuh-Schaft 18, der mit einer Innenschuh-Brandsohle 20 vernäht ist, wobei das entsprechende Nahtmaterial in Figur 1 nicht dargestellt ist. Im vorderen Bereich des Innenschuhs 14 weist dieser eine stützende Vorderkappe 22 auf, die auf dem Innenschuh-Schaft 18 aufgebracht ist, der weiterhin eine in hochgebogenem Zustand dargestellte Innenschuh-Zunge 34 umfasst. Der Außenschuh 12 umfasst eine Außenschuh-Sohle 24 mit einer Außenschuh-Laufsohle 26 und eine Außenschuh-Zwischensohle 28, die aufgrund der gewählten Darstellungsperspektive nur unvollständig zu sehen sind. Weiterhin dargestellt sind eine Außenschuh-Brandsohle 30 und ein Außenschuh-Schaft 32 mit einer Außenschuh-Zunge 36. Eine von außen nicht direkt sichtbare Zehenschutzkappe 66 des Außenschuhs 12 ist unter der Oberfläche des Außenschuh-Schafts 32 angeordnet, sodass deren ungefährer Verlauf mittels einer Strichlinie symbolisiert wird. Nicht dargestellt sind weitere Details wie etwa Schnürsenkel oder Führungen dafür.

**Figur 2** zeigt eine schematische räumliche Ansicht eines Innenschuhs 14 mit der Innenschuh-Brandsohle 20 und dem Innenschuh-Schaft 18, an dessen vorderem Bereich eine stützende Vorderkappe 22 vorliegt. Der Innenschuh-Schaft 18 umfasst weiterhin die Innenschuh-Zunge 34, die im vorliegenden Fall angenäht ist, wobei die Naht 64, welche die Innenschuh-Zunge 34 mit dem Innenschuh-Schaft 18 verbindet, aufgrund der gewählten Perspektive zwischen der Innenschuh-Zunge 34 und dem Innenschuh-Schaft 18 nicht sichtbar ist, sich jedoch seitlich weiter in den Bereich des Innenschuh-Schaft des 18 fortsetzt und mittels einer Strichlinie symbolisiert ist. Jedoch können die Innenschuh-Zunge 34 und der Innenschuh-Schaft 18 alternativ auch einstückig ausgebildet sein. Ein Stabilisierungselement 62 in Form eines aufgenähten Textilstreifens stabilisiert den oberen Rand des Innenschuh-Schafts 18, wobei die Naht nicht gezeigt ist.

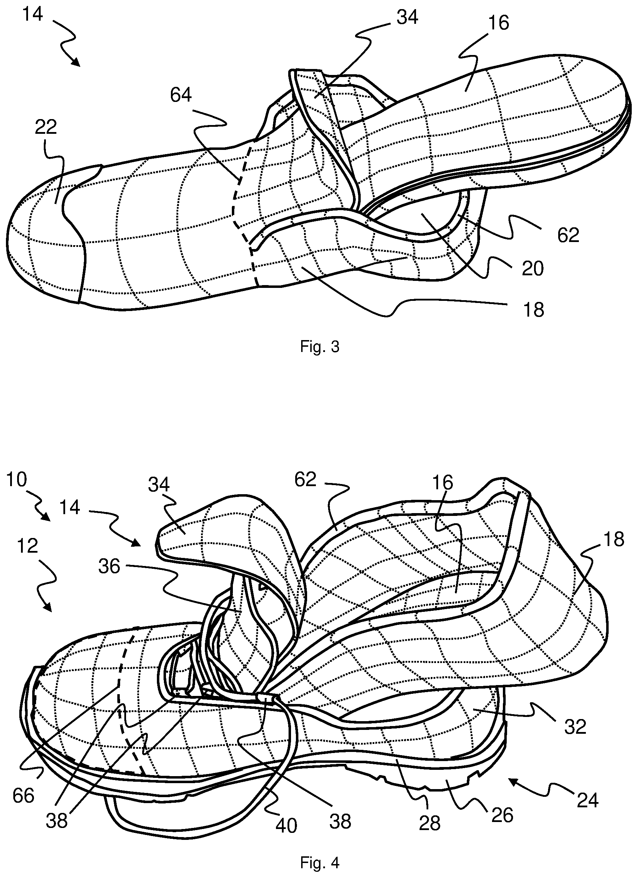

**Figur 3** zeigt eine räumliche Ansicht des Innenschuhs 14 aus Figur 2, in den eine Fußbettung 16 teilweise eingeführt ist, für die ein mehrlagiger Aufbau angedeutet ist, ohne dass die einzelnen Lagen mit Bezugszeichen versehen sind. Eine Naht 64, die über eine Strichlinie symbolisiert wird, dient dazu, den Innenschuh-Schaft 18 in seine Endform zu bringen und gleichzeitig die Zunge 34 mit dem Innenschuh-Schaft 18 zu verbinden.

**Figur 4** zeigt in einer schematischen räumlichen Ansicht den Innenschuh 14 aus Figur 3, in welchen die Fußbettung 16 nun vollständig eingeführt ist. Der Innenschuh 14 selbst wird in einen Außenschuh 12 eingesetzt, befindet sich jedoch noch nicht im vollständig eingesetzten Zustand. Zusätzlich zu der bereits in der Figur 1 gezeigten Außenschuh-Sohle 24 mit der Außenschuh-Laufsohle 26 und der Außenschuh-Zwischensohle 28 sind in Figur 4 weitere Details gezeigt, nämlich vorliegend aus textilem Material ausgeführte Schlaufen 38 zur Führung eines Schnürsenkels 40. Der ungefähre Verlauf der unterhalb des Außenschuh-Schafts 32 verlaufenden Zehenschutzkappe 66 ist wie auch in den nachfolgenden zwei Figuren mittels einer Strichlinie symbolisiert.

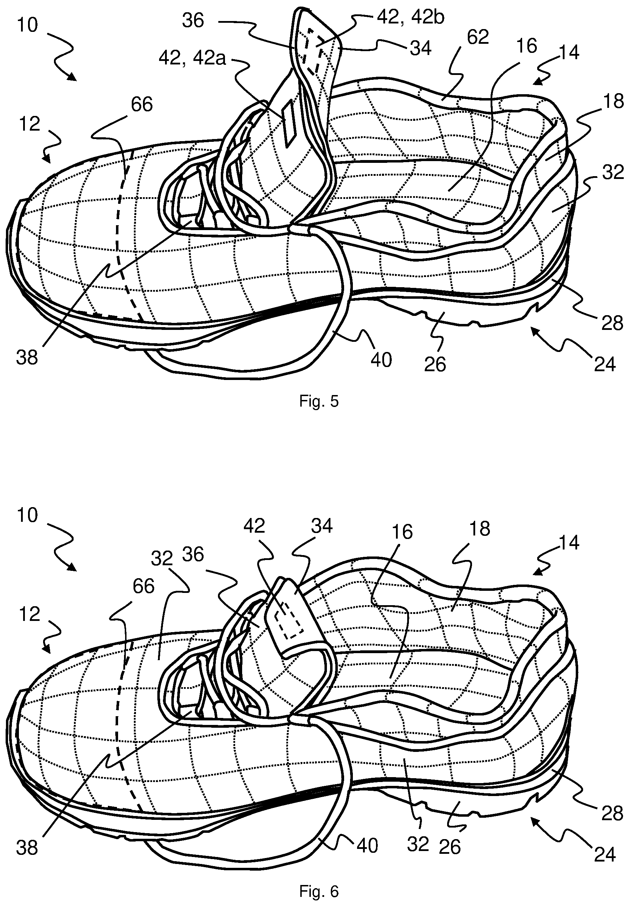

**Figur 5** zeigt einen Diabetiker-Sicherheitsschuh 10, wobei der Innenschuh 14 aus der Figur 4 nun vollständig in den Außenschuh 12 eingesetzt ist. Es ist erkennbar, dass sich der Innenschuh-Schaft 18 weiter in Richtung des Körpers eines potentiellen Trägers des Diabetiker-Sicherheitsschuhs 10 erstreckt als der Außenschuh-Schaft 32. Dadurch wird sichergestellt, dass ein in dem Innenschuh 14 befindlicher und in der Figur 5 nicht dargestellter Fuß des Schuhträgers keinen direkten Kontakt mit dem Material des Außenschuh-Schafts 32, sondern lediglich mit dem Vergleich dazu weicheren Material des Innenschuh-Schafts 18 hat. Im Vergleich mit Figur 3 ist zusätzlich vorhanden ein Fixiermittel 42, das als eine Klettvorrichtung ausgebildet ist, zu der ein Hakenbereich 42a gehört. Der Hakenbereich 42a ist auf der Außenseite der Außenschuh-Zunge 36 angebracht ist und ein für ein Zusammenwirken mit einem Ösenbereich 42b vorgesehen, welcher auf der Außenseite der Innenschuh-Zunge 34 angebracht ist. Der Ösenbereich 42b ist aufgrund der vorliegenden räumlichen Perspektive daher nicht direkt sichtbar und daher durch eine Strichlinie angedeutet. Weiterhin dargestellt sind die optional vorhandene Fußbettung 16, das Stabilisierungselement 62 des Innenschuhs 14, die Außenschuh-Sohle 24 mit der Außenschuh-Laufsohle 26 und der Außenschuh-Zwischensohle 28, die unter dem Außenschuh-Schaft 32 angeordnete Zehenschutzkappe 66 und die Schlaufen 38 zur Führung des Schnürsenkels 40.

**Figur 6** zeigt nun den Diabetiker-Sicherheitsschuh 10 aus Figur 5, wobei die Innenschuh-Zunge 34 des Innenschuh-Schafts 18 um die Außenschuh-Zunge 36 des Außenschuh-Schafts 32 geführt ist und mittels des Fixiermittels 42, welches nunmehr durch die Innenschuh-Zunge 34 verdeckt ist und daher mittels einer Strichlinie dargestellt wird, an der Außenschuh-Zunge 36 fixiert ist. Ein in der Figur 6 nicht dargestellter Fuß eines Trägers des Diabetiker-Sicherheitsschuhs 10 würde daher durch die Innenschuh-Zunge 34 vor dem im Vergleich dazu härteren Material der Außenschuh-Zunge 36 geschützt werden.

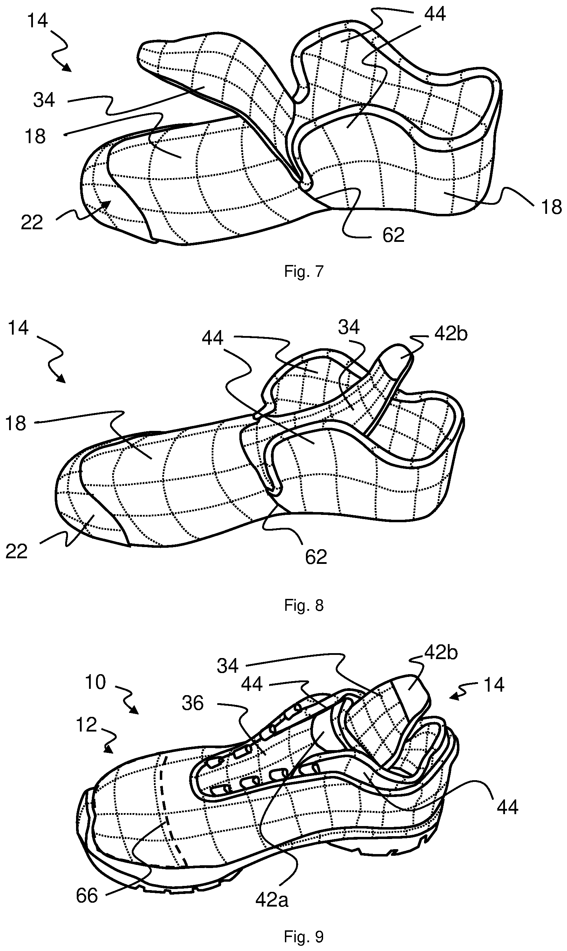

**Figur 7** zeigt einen Innenschuh 14 mit einer Innenschuh-Zunge 34. Die oberen Ränder des Innenschuh-Schafts 18 sind ungefähr in dem Bereich, der dem Fußrücken und/oder dem Knöchelbereich eines eingesetzten Fußes entspricht, nach oben erweitert und bilden Seitenlaschen 44. Zur besseren Sichtbarmachung der Seitenlaschen 44 ist die Innenschuh-Zunge 34, die vorzugsweise mittels der Naht 62, welche auch den

Außenschuh-Schaft 32 in seine Endform bringt, an dem Innenschuh-Schaft 18 befestigt ist, nach vorne gebogen.

**Figur 8** zeigt den gleichen Innenschuh 14 aus Figur 7 mit der Innenschuh-Zunge 34 in einer Position, die einer bei Verwendung des Innenschuhs 14 eingenommenen Position besser entspricht, sodass nun auch der an der Außenseite der Innenschuh-Zunge 34 angebrachte Ösenbereich des Fixiermittels 42b, der in der Figur 7 verdeckt war und daher nicht angezeigt wurde, zu sehen ist. Weiterhin ist erkennbar, dass die Seitenlaschen 44 sich so weit nach oben erstrecken, also in Richtung eines Fußrückens, dass sie über die Innenschuh-Zunge 34 geführt werden können.

**Figur 9** zeigt nun einen Außenschuh 12, in den der Innenschuh 14 aus Figur 8 eingeführt ist. Es ist erkennbar, dass die Seitenlaschen 44 über die Außenschuh-Zunge 36 geführt werden können. Wird nun noch - wie in Figur 9 nicht gezeigt - die Innenschuh-Zunge 34 um die Außenschuh-Zunge 36 geführt und mittels des Ösenbereichs des Fixiermittels 42b an dem Hakenbereich des Fixiermittels 42a befestigt, so befindet sich die Außenschuh-Zunge 36 in einer Position, in der sie sowohl von der Innenschuh-Zunge 34 als auch von den Seitenlaschen 44 umgriffen wird und somit nicht verrutschen kann. Der ungefähre Verlauf der Zehenschutzkappe 66 des Außenschuhs 12 ist wiederum mittels einer Strichlinie symbolisiert

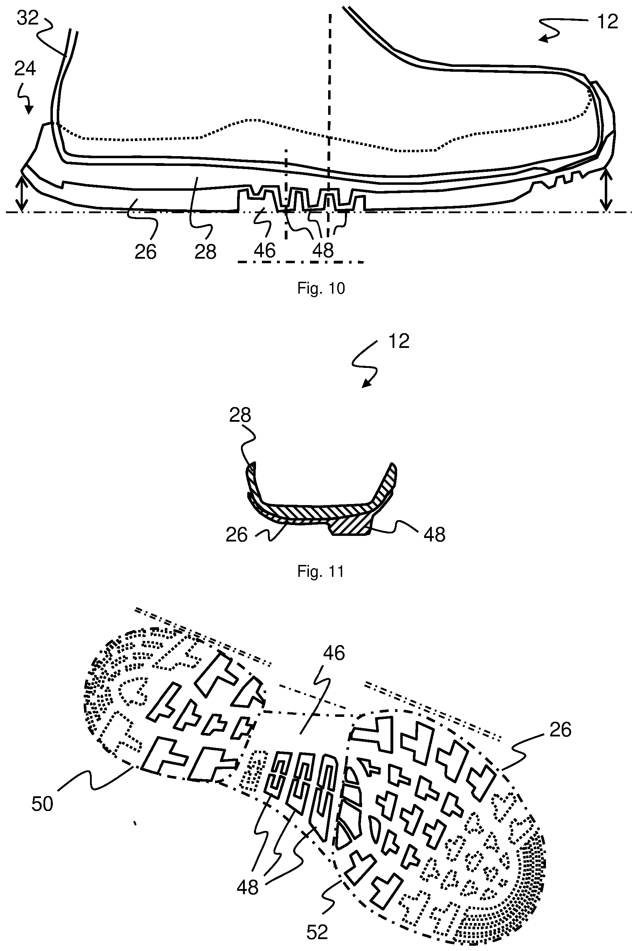

**Figur 10** zeigt einen schematischen Längsschnitt eines nicht mit allen Details dargestellten Außenschuhs 12. Dargestellt sind der Außenschuh-Schaft 32 sowie die Außenschuh-Sohle 24 mit der Außenschuh-Laufsohle 26 und der Außenschuh-Zwischensohle 28. Zur besseren Veranschaulichung ist der außerhalb der Schnittebene liegende Anteil der Außenschuh-Zwischensohle 28 durch eine punktierte Linie dargestellt. Die Außenschuh-Laufsohle 26 besteht aus einem im Vergleich mit der Zwischensohle 28 härteren Material, wobei die Außenform der Laufsohle 26 eine zurückverlegte Mittelfußrolle aufweist. Die Laufsohle 26 hat damit in der Seitenansicht ein insgesamt konvexes Gesamtaußenprofil, wobei der Scheitelpunkt des konvexen Gesamtaußenprofils durch den Schnittpunkt mit der dargestellten senkrechten Strichlinie ausgewiesen ist. Die Außenschuh-Sohle 24 weist einen Schuhgelenk-Bereich 46 auf, dessen Erstreckung zwischen dem benachbarten Fersenbereich und dem benachbarten Mittelfußbereich durch eine waagrechte Strich-Punkt-Linie gekennzeichnet ist. In dem in dem Schuhgelenk-Bereich 46 sind zur Wahrung des insgesamt konvexen Gesamtaußenprofils mehrere Profilblöcke 48 angeordnet. Diese Profilblöcke 48 stellen sicher, dass beim Laufen die Außenschuh-Laufsohle 26 ohne Unterbrechung der kontinuierlichen Abrollbewegung auf dem mittels einer Strich-Punkt-Punkt-Linie dargestellten Untergrund abrollen kann. Die senkrechte Strichlinie verläuft innerhalb der Gelenkbelastungsfläche des Fußgelenks eines nicht dargestellten Fußes. Weiterhin sind durch zwei Doppelpfeile sind eine Absatzsprengung und eine Spitzensprengung markiert, die beim Aufsetzen des Absatzes bzw. beim Abstoßen der Sohle während der Laufbewegung Belastungsspitzen abmildern. Der Absatz selbst ist als Rollabsatz ausgebildet und trägt zu einer flüssigen Abrollbewegung beim Auftreffen der Laufsohle auf dem Laufuntergrund während der Laufbewegung bei.

**Figur 11** zeigt einen schematischen Querschnitt durch den Außenschuh 12 aus Figur 10 entlang der in Figur 11 gezeigten senkrechten Strichlinie, wobei vom Außenschuh 12 nur der Bereich der Außenschuh-Zwischensohle 28 und der Bereich der Außenschuh-Laufsohle 26 berücksichtigt sind. Es ist erkennbar, dass sich der angeschnittene Profilblock 48 nicht über die gesamte Breite der Außenschuh-Laufsohle 26 erstreckt, sondern zur Seite hin verlagert ist, vorzugsweise hin zum Innenrist des für den Außenschuh 12 vorgesehenen Fußes.

**Figur 12** zeigt eine schematische Draufsicht auf eine Außenschuh-Laufsohle 26. Erkennbar ist ein Schuhgelenk-Bereich 46, dessen ungefähre Erstreckung in Längsrichtung wie auch in Figur 10 wiederum durch eine zusätzliche Strich-Punkt-Linie kenntlich gemacht ist, und an den sich ein Laufsohlen-Fersenbereich 50 sowie ein Laufsohlen-Mittelfußbereich 52 anschließen, deren ungefähre Erstreckung in Längsrichtung jeweils durch zwei parallel verlaufende Strich-Punkt-Linien kenntlich gemacht ist. Im Schuhgelenk-Bereich 46 sind die drei in Figur 10 gezeigten Profilblöcke 48 dargestellt. Alle durchgehend gezeichneten Konturen dieser Profilblöcke 48 sowie weiterer, nicht durch Bezugszeichen gekennzeichneter Profilblöcke des Laufsohlen-Fersenbereichs 50 und des Laufsohlen-Mittelfußbereichs 52, liegen in einer Fläche und haben Kontakt mit einem Laufuntergrund, wenn ein Schuhträger in dem Diabetiker-Sicherheitsschuh auf dem Laufuntergrund steht. Die punktiert gezeichneten Profilblöcke haben beim Stehen auf dem Laufuntergrund keinen Kontakt mit diesem, berühren diesen jedoch beim Abrollen während des Gehens oder Laufens. Es ist ersichtlich, dass die im Schuhgelenk-Bereich 46 unterbrochene Kontur der Außenschuh-Laufsohle 26 durch die Profilblöcke 48 ergänzt wird, sodass bei einer Gehbewegung auch in diesem Bereich ein Abrollen möglich ist. Weiterhin ist den punktierten Linien der Profilblöcke in Teilen des Laufsohlen-Fersenbereich 50 zu entnehmen, dass - wie auch schon in Figur 10 dargestellt - ein ausgeprägter Abrollabsatz vorliegt. Wie ebenfalls bereits aus Figur 11 ersichtlich, erstrecken sich die Profilblöcke 48 nicht über die gesamte Breite der Außenschuh-Laufsohle 26.

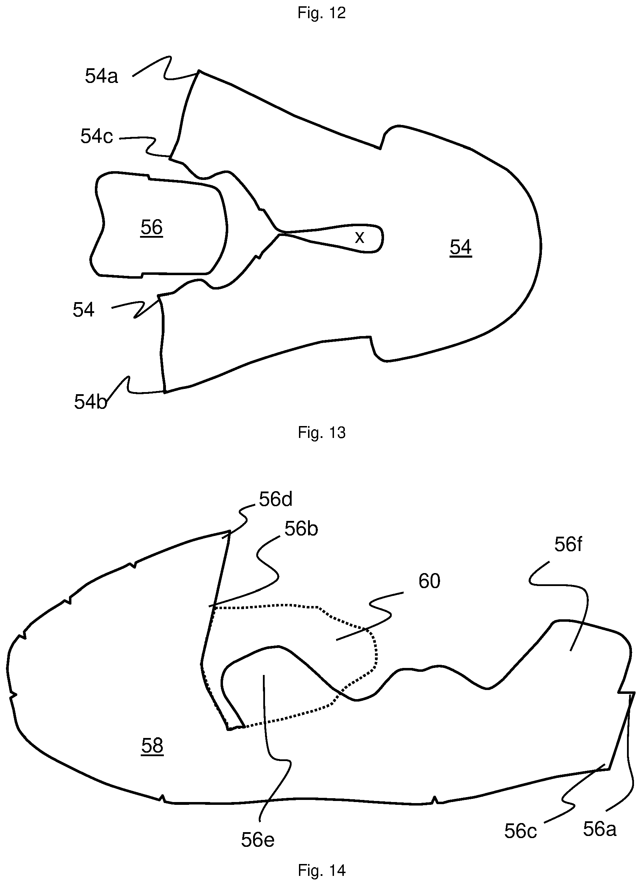

**Figur 13** zeigt eine schematische Draufsicht auf ein Außenschuh-Schaft-Material 54 und ein Außenschuh-Zungen-Material 56, wie es aus einer Bahn aus einem entsprechenden Material ausgestanzt wird und als Rohling für die weitere Verarbeitung verwendet wird. Das Außenschuh-Schaft-Material 54 wird im Raum gebogen, sodass die Positionen 54a und Position 54b nach unten hinter die Bildebene gebogen und miteinander verbunden werden, und die Position 54c und die Position 54d nach oben vor die Bildebene geführt und miteinander verbunden werden. Der Rand des Außenschuh-Schaft-Materials 54 wird dann zwischen 54a, 54b und 54c, 54d verbunden, und bildet eine einzige Naht oder Verbindungslinie im Fersenbereich. Dementsprechend ist es möglich, einen weitgehend nahtfreien Außenschuh-Schaft 32 bereitzustellen. Die in der Figur 13 mit "x" bezeichnete Position weitet sich im Rahmen des Biegens im Raum auf zu der Öffnung, welche das Außenschuh-Zungen-Material 56 aufnimmt.

**Figur 14** zeigt eine schematische Draufsicht auf ein Innenschuh-Schaft-Material 58 und ein Innenschuh-Zungen-Material 60, die als Rohlinge für die weitere Verarbeitung verwendet werden. Das Innenschuh-Schaft-Material 58 wird im Raum so gebogen, dass die Position 56a mit der Position 56b verbunden wird, und die Position 56c mit der Position 56d. Das Innenschuh-Schaft-Material 58 wird dann zwischen 56a-56b und 56c-56d miteinander vernäht, wobei sich eine seitliche Naht ungefähr im Mittelfußbereich ergibt. Die Positionen 56e und 56f bezeichnen die Stellen, die in einem fertigen Innenschuh-Schaft 18 die Seitenlaschen 44 darstellen, der dazwischenliegende Bereich liegt im Fersenbereich des Innenschuh-Schafts 18. Das Innenschuh-Zungen-Material 60, das der besseren Übersichtlichkeit halber punktierte gezeichnet ist, wird gemäß der gezeigten Ausführungsform als separates Teil bereitgestellt und mit dem Innenschuh-Schaft-Material 58 vernäht. Dementsprechend ist es möglich, einen weitgehend nahtfreien Innenschuh-Schaft 18 bereitzustellen.

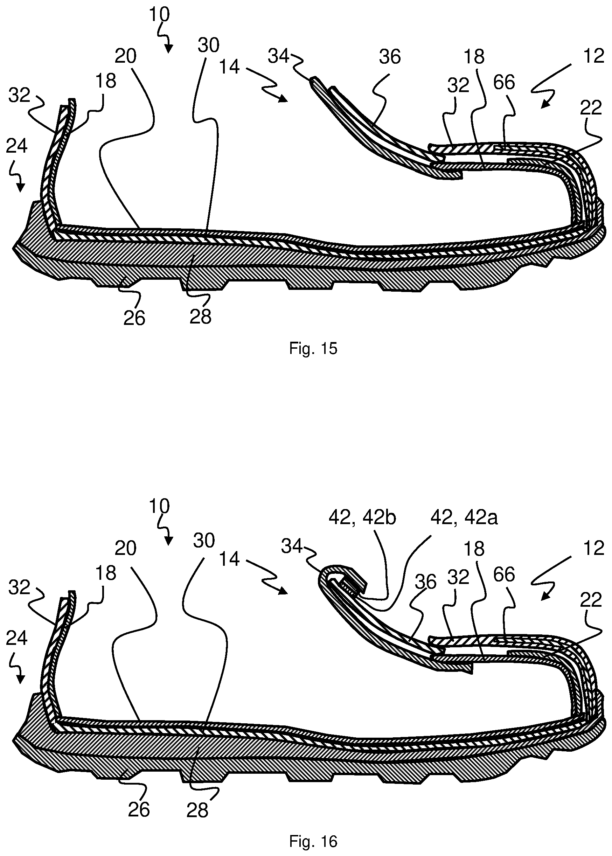

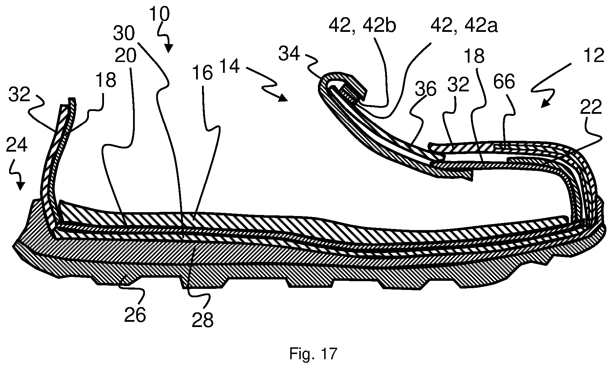

**Figur 15** zeigt einen schematischen Längsschnitt durch einen Diabetiker-Sicherheitsschuh 10. Figur 15 ist nicht notwendigerweise maßstabsgerecht, insbesondere die Dicken der einzelnen gezeigten Bestandteile können der besseren Darstellbarkeit wegen von einem tatsächlich Diabetiker-Sicherheitsschuh 10 abweichen, insbesondere größer sein. Entsprechendes gilt auch für die Figuren 16 und 17. Der Diabetiker-Sicherheitsschuh 10 umfasst einen Außenschuh 12 und einen Innenschuh 14. Die Außenschuh-Sohle 24 des Außenschuhs 12 umfasst optional und vorliegend gezeigt weiterhin eine Außenschuh-Zwischensohle 28 und eine sich in Richtung zum Laufuntergrund in daran anschließende Außenschuh-Laufsohle 26. An die Außenschuh-Zwischensohle 28 schließt sich in Richtung des von dem Diabetiker-Sicherheitsschuh 10 aufzunehmenden Fußes eine Außenschuh-Brandsohle 30 an. Falls der Diabetiker-Sicherheitsschuh 10 keine Außenschuh-Zwischensohle 28 aufweist, schließt sich die Außenschuh-Brandsohle 30 direkt an die Außenschuh-Laufsohle 26 an. Die Außenschuh-Brandsohle 30 ist vorzugsweise über eine Naht mit dem Außenschuh-Schaft 32 verbunden. Der Außenschuh-Schaft 32 umfasst eine Außenschuh-Zehenschutzkappe 66. Die Außenschuh-Zehenschutzkappe 66 kann in Abhängigkeit von den jeweils geltenden Bestimmungen für Zehenschutzkappen von Sicherheitsschuhen beispielsweise an den Außenschuh-Schaft 32 angelagert sein oder, wie vorliegend gezeigt, so in den Außenschuh-Schaft 32 eingearbeitet sein, dass sie nicht ohne Zerstörung des Außenschuh-Schaft 32 von diesem getrennt werden kann. Die Außenschuh-Zehenschutzkappe 66 umschließt den Zehenbereich eines innerhalb des Diabetiker-Sicherheitsschuhs 10 befindlichen Fußes (hier nicht dargestellt) von vorne, von den Seiten (rechts und links) und von oben, und bietet dadurch Schutz vor mechanischen Einwirkungen. Der Außenschuh-Schaft 32 umfasst weiterhin eine Außenschuh-Zunge 36. In den Außenschuh 12 ist einsetzbar und wieder entnehmbar ein Innenschuh 14. Dieser umfasst eine Innenschuh-Brandsohle 20, welche bei einem in den Außenschuh 12 eingesetzten Innenschuh 14 auf die Außenschuh-Brandsohle 30 aufsetzt. Die Außenschuh-Brandsohle 30 kann somit als Formgeber für die Innenschuh-Brandsohle 20 fungieren, indem die Größe und/oder vorzugsweise die Oberflächengeometrie der Außenschuh-Brandsohle 30 und der Innenschuh-Brandsohle 20 auf einander abgestimmt werden, sodass beim in den Außenschuh 12 eingesetzten Innenschuh 14 eine Faltenbildung so weit wie möglich unterdrückt oder ganz vermieden wird. Weiterhin wird durch den Kontakt zwischen der Innenschuh-Brandsohle 20 und der Außenschuh-Brandsohle 30 bei ESD-fähigen Diabetiker-Sicherheitsschuhen 10 eine optimale Ladungsableitung ermöglicht. Die Innenschuh-Brandsohle 20 ist mit dem Innenschuh-Schaft 18 verbunden, vorzugsweise über eine hier nicht dargestellte Naht. Der Innenschuh-Schaft 18 weist eine Innenschuh-Zunge 34 sowie eine stützende Vorderkappe 22 auf. Die Innenschuh-Zunge 34 ist vorzugsweise so dimensioniert, dass sie allein oder in Zusammenwirken mit dem sich in Richtung des Schuhspitzendendes anschließenden Anteils des Innenschuh-Schafts 18 einen in den Diabetiker-Sicherheitsschuh 10 eingeführten Fuß von der Außenschuh-Zunge 36 abschirmt. Die stützende Vorderkappe 22 des Innenschuh-Schafts 18 verleiht dem Innenschuh-Schaft 18 eine Formstabilität und wirkt einer Faltenbildung beim Einführen des Innenschuhs 14 in den Außenschuh 12 entgegen.

**Figur 16** zeigt den Diabetiker-Sicherheitsschuh 10 aus Figur 15, wobei die Innenschuh-Zunge 34 um die Außenschuh-Zunge 36 führbar ist. Vorliegend ist gezeigt, dass die Innenschuh-Zunge 34 mittels eines Fixiermittels 42 an der Außenschuh-Zunge 36 fixierbar ist. Das Fixiermittel 42 umfasst vorliegend einen Hakenbereich 42a, der an der Außenschuh-Zunge 36 angebracht ist, und einen Ösenbereich 42b, der an der Innenschuh- Zunge 34 angebracht ist. Durch die um die Außenschuh-Zunge 36 führbare Innenschuh-Zunge 34 wird vorteilhaft verhindert, dass ein in den Diabetiker-Sicherheitsschuh 10 eingeführter Fuß mit der Außenschuh-Zunge 36 in Kontakt kommt.

**Figur 17** zeigt den Längsschnitt aus Figur 16, wobei in den Innenschuh 14 zusätzlich noch eine entnehmbare Fußbettung 16 eingeführt ist. Eine entsprechende Fußbettung 16 kann selbst verständlich auch für die in Figur 15 gezeigte Ausführungsform des Diabetiker-Sicherheitsschuhs 10 vorgesehen sein.

Obwohl die Erfindung im Detail erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten sowie Kombinationsmöglichkeiten von Elementen der hierin beschriebenen Ausführungsformen und Weiterbildungen existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen, beispielsweise hinsichtlich der Funktion oder der Anordnung einzelner, in einer beispielhaften Ausführungsform genannter Elemente, vornehmen kann, ohne den Schutzbereich zu verlassen, der durch die Ansprüche und deren rechtliche Entsprechungen, wie etwa weitergehenden Erläuterung in der Beschreibung, definiert wird.

### Bezugszeichenliste

- 10: Diabetiker-Sicherheitsschuh
- 12: Außenschuh
- 14: Innenschuh
- 16: Fußbettung
- 18: Innenschuh-Schaft
- 20: Innenschuh-Brandsohle
- 22: stützende Vorderkappe
- 24: Außenschuh-Sohle
- 26: Außenschuh-Laufsohle
- 28: Außenschuh-Zwischensohle
- 30: Außenschuh-Brandsohle
- 32: Außenschuh-Schaft
- 34: Innenschuh-Zunge
- 36: Außenschuh-Zunge
- 38: Schlaufen
- 40: Schnürsenkel
- 42: Fixiermittel
- 42a: Hakenbereich des Fixiermittels
- 42b: Ösenbereich des Fixiermittels
- 44: Seitenlasche
- 46: Schuhgelenk-Bereich
- 48: Profilblock
- 50: Laufsohlen-Fersenbereich
- 52: Laufsohlen-Mittelfußbereich
- 54: Außenschuh-Schaft-Material
- 54a,b,c,d: Positionen innerhalb des Außenschuh-Schaft-Materials
- 56: Außenschuh-Zungen-Material
- 58: Innenschuh-Schaft-Material
- 58a,b,c,d,e,f: Positionen innerhalb des Innenschuh-Schaft-Materials
- 60: Innenschuh-Zungen-Material
- 62: Stabilisierungselement
- 64: Naht
- 66: Zehenschutzkappe

## Patentansprüche

1. Verfahren zur Anpassung eines Diabetiker-Sicherheitsschuhs (10),
wobei der Diabetiker-Sicherheitsschuh (10) einen Außenschuh (12) und einen in den Außenschuh (12) einsetzbaren und aus dem Außenschuh (12) wieder entnehmbaren Innenschuh (14) umfasst, wobei
- der Außenschuh (12) eine Außenschuh-Sohle (24), die eine Außenschuh-Laufsohle (26) und eine Außenschuh-Brandsohle (30) umfasst, und weiterhin einen Außenschuh-Schaft (32) aufweist,
- der Außenschuh (12) eine Außenschuh-Zehenschutzkappe (66) aufweist, und wobei
- der Innenschuh (14) einen Innenschuh-Schaft (18) und eine Innenschuh-Brandsohle (20) aufweist, und
- der Innenschuh-Schaft (18) eine stützende Vorderkappe (22) aufweist.
und wobei der Außenschuh-Schaft (32) des Außenschuhs (12) ein thermisch nachformbares Textilmaterial, umfassend einen Polyester und/oder ein Polyamid aufweist,
wobei das Verfahren folgende Schritte umfasst:
- Bestimmen der Schuhform des Außenschuhs (12) des Diabetiker-Sicherheitsschuhs (10) an wenigstens einem Schuhbereich,
- Bestimmen der Fußform des für den Diabetiker-Sicherheitsschuh (10) vorgesehenen Trägers an wenigstens einem Fußbereich, welcher dem Schuhbereich des Außenschuhs (12) entspricht,
- Bestimmen der Abweichung oder Abweichungen der Schuhform von der Fußform,
- lokales Erwärmen des thermisch nachformbaren Textilmaterials des Außenschuhs (12) auf eine Temperatur, die eine Nachformbarkeit ermöglicht,
- lokales Verformen des Textilmaterials an der lokal erwärmten Stelle unter Verringerung der Abweichung der Schuhform in dem Schuhbereich von der Fußform in dem Fußbereich,
- Abkühlen der lokal erwärmten Stelle des Textilmaterials auf eine Temperatur, unterhalb welcher keine Nachformbarkeit mehr möglich ist.

2. Verfahren nach Anspruch 1, **dadurch gekennzeichnet, dass** das thermisch nachformbare Textilmaterial einen thermoplastischen Polyester und/oder ein thermoplastisches Polyurethan umfasst.

3. Verfahren nach Anspruch 1, **dadurch gekennzeichnet, dass** das thermisch nachformbare Textilmaterial einen Schmelzklebstoff umfasst.

4. Verfahren nach einem der vorhergehenden Ansprüche, **dadurch gekennzeichnet, dass** das Verfahren mehrmals wiederholt wird, bis die Schuhkontur auf die Fußform des Trägers zufriedenstellend abgestimmt ist.

5. Verfahren nach einem der vorhergehenden Ansprüche, **dadurch gekennzeichnet, dass** das Verfahren so oft wiederholt wird, bis ein Vollkontakt des Fußes mit der gesamten oder im Wesentlichen gesamten Oberfläche des Außenschuh-Schafts mit dem Fuß erreicht ist.

6. Verfahren nach einem der vorhergehenden Ansprüche, **dadurch gekennzeichnet, dass** das Verfahren so oft wiederholt wird, bis ein Kontakt des Fußes mit dem Außenschuh-Schaft an anatomisch markanten Stellen erreicht ist, um so Reibung eines mit zu viel Freiraum im Diabetiker-Sicherheitsschuh angeordneten Fußes zu vermeiden oder zu verringern.

7. Verfahren nach einem der vorhergehenden Ansprüche, **dadurch gekennzeichnet, dass** das Bestimmen der Schuhform bzw. der Fußform erfolgt
- durch herkömmliche Längenmessung,
- durch 3D-Modelle des Außenschuhs bzw. des Fußes des Schuhträgers, insbesondere mittels 3D-Laserscan,
- durch Feststellung von Druckstellen zwischen dem Fuß und dem Außenschuh mittels eines druckempfindlichen Papiers oder Kunststoffs,
- durch Verwendung eines Meßsystems,
- durch Befragung des Trägers, an welchen Schuhbereichen zu weite Räume bzw. Druckkontakt wahrgenommen werden.

8. Verfahren nach einem der vorhergehenden Ansprüche, **dadurch gekennzeichnet, dass** sich der Fuß des Schuhträgers bei der Bestimmung der Schuhkontur im Innenschuh befindet.

9. Verfahren nach einem der vorhergehenden Ansprüche, **dadurch gekennzeichnet, dass** es sich um eine optimale Anpassung des Außenschuhs des Diabetiker-Sicherheitsschuhs auf den Fuß des Schuhträgers handelt, um diesen über den dazwischen gelagerten Innenschuh-Schaft in einen Vollkontakt mit dem Fuß zu bringen.

10. Verfahren nach Anspruch 9, **dadurch gekennzeichnet, dass** die optimale Anpassung des Außenschuhs des Diabetiker-Sicherheitsschuhs auf den Fuß des Schuhträgers
- die gesamte oder im Wesentlichen gesamte Oberfläche des Außenschuh-Schafts. oder
- zumindest Teile davon, die anatomisch markante Stellen des Fußes abdecken,
betrifft.
